# EUROPÄISCHE PATENTSCHRIFT

(11) **EP 1 086 194 B1**
(45) Veröffentlichungstag und Bekanntmachung des Hinweises auf die Patenterteilung: **21.05.2003**
(21) Anmeldenummer: 99929151.1
(22) Anmeldetag: 08.06.1999
(51) Int. Cl.: C09K 19/46, C09K 19/42, C09K 19/02

(54) **MONOSTABILES FERROELEKTRISCHES AKTIVMATRIX-DISPLAY**
MONOSTABLE FERROELECTRIC ACTIVE MATRIX DISPLAY
AFFICHAGE A MATRICE ACTIVE FERROELECTRIQUE MONOSTABLE

(30) Priorität: 08.06.1998 DE 19825484; 07.07.1998 DE 19830203
(43) Veröffentlichungstag der Anmeldung: 28.03.2001
(73) Patentinhaber: Aventis Research & Technologies GmbH & Co. KG., 65929 Frankfurt am Main (DE)
(72) Erfinder: WINGEN, Rainer, D-65795 Hattersheim (DE); HORNUNG, Barbara, D-63594 Hasselroth (DE); NONAKA, Toshiaki, Iruma-shi, Saitama (JP)
(74) Vertreter: Isenbruck, Günter, Dr.
(86) Internationale Anmeldenummer: EP9903939
(87) Internationale Veröffentlichungsnummer: WO99064538

(56) Entgegenhaltungen:
- EP-A- 0 916 713
- EP-A- 0 916 715
- WO-A-97/04039
- DE-A- 19 732 381

## Beschreibung

Der Ersatz der Kathodenstrahlröhre (Bildröhre) durch einen flachen Bildschirm erfordert eine Displaytechnologie, die gleichzeitig eine hohe Bildauflösung, d.h. mehr als 1000 Zeilen, eine hohe Bildhelligkeit (>200 Cd/m²), einen hohen Kontrast (>100:1), eine hohe Bildfrequenz (>60 Hz), eine ausreichende Farbdarstellung (>16 Mio Farben), ein großes Bildformat (>40 cm Bildschirmdiagonale), eine geringe Leistungsaufnahme und einen weiten Betrachtungswinkel ermöglicht und zudem kostengünstig herstellbar ist. Bislang existiert keine Technologie, die alle diese Merkmale gleichzeitig in vollem Umfang erfüllt.

Viele Hersteller haben Bildschirme auf der Basis nematischer Flüssigkristalle entwickelt, die seit einigen Jahren beispielsweise im Bereich von Notebook PC, Personal Digital Assistants und Desktop Monitoren im Einsatz sind. Dabei werden die Technologien STN (Supertwisted Nematics), AM-TN (Active Matrix - Twisted Nematics), AM-IPS (Active Matrix - In Plane Switching), AM-MVA (Active Matrix - Multidomain Vertically Aligned) verwendet, die in der Literatur ausführlich beschrieben werden, siehe z.B. T. Tsukuda, TFT/LCD: Liquid Crystal Displays Addressed by Thin-Film Transistors, Gordon and Breach 1996, ISBN 2-919875-01-9 und darin zitierte Literatur; SID Symposium 1997, ISSN-0097-966X, Seiten 7 bis 10, 15 bis 18, 47 bis 51, 213 bis 216, 383 bis 386, 397 bis 404 und darin zitierte Literatur. Darüber hinaus werden die Technologien PDP (Plasma Display Panel), PALC (Plasma Addressed Liquid Crystal), ELD (Electro Luminescent Display) und FED (Field Emission Display) angewandt, die ebenfalls im zitierten SID Bericht erläutert sind.

Clark und Lagerwall (US 4,367,924) konnten zeigen, daß der Einsatz ferroelektrischer Flüssigkristalle (FLC) in sehr dünnen Zellen zu optoelektrischen Schalt- oder Anzeigeelementen führt, die im Vergleich zu den herkömmlichen TN ("twisted nematic")-Zellen um bis zu einem Faktor 1000 schnellere Schaltzeiten haben, siehe auch EP-A 0 032 362. Aufgrund dieser und anderer günstiger Eigenschaften, z. B. der bistabilen Schaltmöglichkeit und des nahezu blickwinkelunabhängigen Kontrasts, sind FLCs grundsätzlich für Anwendungsgebiete wie Computerdisplays und Fernsehgeräte geeignet, wie ein seit Mai 1995 in Japan von Canon vermarkteter Monitor zeigt.

Für die Verwendung von FLCs in elektrooptischen oder vollständig optischen Bauelementen benötigt man entweder Verbindungen, die smektische Phasen ausbilden und selbst optisch aktiv sind, oder man kann durch Dotierung von Verbindungen, die zwar solche smektischen Phasen ausbilden, selbst aber nicht optisch aktiv sind, mit optisch aktiven Verbindungen ferroelektrische smektische Phasen induzieren. Die gewünschte Phase soll dabei über einen möglichst großen Temperaturbereich stabil sein.

Die einzelnen Bildelemente (Pixel) eines LC-Displays sind üblicherweise in einer x,y Matrix angeordnet, die durch die Anordnung je einer Serie von Elektroden (Leiterbahnen) entlang der Reihen und der Spalten an der Unter- bzw. Oberseite des Displays gebildet wird. Die Kreuzungspunkte der horizontalen (Reihen-) und vertikalen (Spalten-) Elektroden bilden adressierbare Pixel.

Diese Anordnung der Bildpunkte bezeichnet man üblicherweise als eine passive Matrix. Zur Adressierung wurden verschiedene Multiplex-Schemata entwickelt, wie beispielsweise in Displays 1993, Vol. 14, Nr. 2, S. 86-93 und Kontakte 1993 (2), S. 3-14 beschrieben. Die passive Matrixadressierung hat den Vorteil einer einfacheren Herstellung des Displays und damit verbundenen geringen Herstellkosten, jedoch den Nachteil, daß die passive Adressierung immmer nur zeilenweise erfolgen kann, was dazu führt, daß die Adressierungszeit des gesamten Bildschirms bei N Zeilen das N-fache der Zeilenadressierungszeit beträgt. Bei üblichen Zeilenadressierungszeiten von ca. 50 Mikrosekunden bedeutet das eine Bildschirmadressierungszeit von ca. 60 Millisekunden bei z.B. HDTV Norm (High Definition TV, 1152 Zeilen), d.h. einer maximalen Bildfrequenz von ca. 16 Hz. Diese Frequenz ist für die Darstellung bewegter Bilder zu gering. Zudem ist die Darstellung von Graustufen schwierig. Mizutani et.al. haben anläßlich der FLC-Konferenz in Brest, Frankreich (20.-24 Juli 1997, siehe Abstract Book 6^{th} International Conference on Ferroelectric Liquid Crystals, Brest / France) ein passives FLC-Display mit digitalen Graustufen vorgestellt, bei dem jeder der RGB-Bildpunkte (RGB= red, green, blue) in Unterpunkte unterteilt wurde, wodurch vermittels partiellem Schalten die Darstellung von Grauwerten in digitaler Form ermöglicht wird. Bei N Grauwerten unter Verwendung dreier Grundfarben (rot, grün, blau) ergeben sich 3^{N} Farben. Der Nachteil dieser Methode ist eine starke Erhöhung der Anzahl benötigter Bildschirmtreiber und damit der Kosten. Im Falle des in Brest gezeigten Bildschirms wurden dreimal soviele Treiber benötigt, wie bei einem normalen FLC Display ohne digitale Graustufen.

Bei der sogenannten Aktivmatrix-Technologie (AMLCD) wird üblicherweise ein nichtstrukturiertes Substrat mit einem Aktivmatrix-Substrat kombiniert. An jedem Pixel des Aktivmatrixsubstrates ist ein elektrisch nichtlineares Element, beispielsweise ein Dünnschichttransistor, integriert. Bei dem nichtlinearen Element kann es sich auch um Dioden, Metall-Insulator-Metall u.ä. Elemente handeln, die vorteilhaft mit Dünnschichtverfahren hergestellt werden und in der einschlägigen Literatur beschrieben sind, siehe z.B. T. Tsukuda, TFT/LCD: Liquid Crystal Displays Addressed by Thin-Film Transistors, Gordon and Breach 1996,
ISBN 2-919875-01-9 und darin zitierte Literatur.

Aktivmatrix-LCDs werden üblicherweise mit nematischen Flüssigkristallen im TN- (twisted nematics), ECB- (electrically controlled birefringence), VA- (vertically aligned) oder IPS- (in plane switching) Modus betrieben. In jedem Fall wird durch die aktive Matrix an jedem Bildpunkt ein elektrisches Feld individueller Stärke erzeugt, das eine Orientierungsänderung und damit eine Änderung der Doppelbrechung erzeugt, die wiederum im polarisierten Licht sichtbar ist. Ein schwerwiegender Nachteil dieser Verfahren ist die mangelnde Videofähigkeit bedingt durch die zu langen Schaltzeiten nematischer Flüssigkristalle.

Unter anderem aus diesem Grunde wurden Flüssigkristallanzeigen, die auf einer Kombination aus ferroelektrischen Flüssigkristallmaterialien und Aktiven Matrix -Elementen beruhen, vorgeschlagen, siehe z.B. WO 97/12355 oder Ferroelectrics 1996, 179, 141-152; W.J.A.M. Hartmann, IEEE Trans. Electron. Devices 1989, 36,(9;Pt. 1), 1895-9, sowie Dissertation Eindhoven, Niederlande 1990.

Hartmann nutzte eine Kombination aus der sogenannten 'Quasi-bookshelf Geometrie' (QBG) von FLC und einer TFT (Thin-Film-Transistor) Aktivmatrix und erhielt gleichzeitig eine hohe Schaltgeschwindigkeit, Graustufen und eine hohe Transmission. Allerdings ist die QBG nicht über einen weiten Temperaturbereich stabil, da durch die Temperaturabhängigkeit der smektischen Schichtdicke die feldinduzierte Lagenstruktur aufbricht oder sich dreht. Darüber hinaus nutzt Hartmann ein FLC-Material mit einer Spontanpolarisation von mehr als 20 nC/cm², was bei Bildpunkten mit realistischen Dimensionen von z.B. 0,01 mm² Fläche zu großen elektrischen Ladungen führt (bei Sättigung gilt Q = 2 A P, A= Bildpunktfläche, P= spontane Polarisation), die z.B. mit kostengünstig herstellbaren amorphen Silizium - TFT während der Öffnungszeit des TFT nicht auf den Bildpunkt gelangen können. Aus diesen Gründen wurde diese Technologie bisher nicht weiterverfolgt.

Während Hartmann die ladungskontrollierte Bistabilität zur Darstellung einer nahezu kontinuierlichen Grauskala ausnutzt, haben Nito et. al. eine monostabile FLC- Geometrie vorgeschlagen, siehe Journal of the SID, 1 / 2, 1993, Seiten 163-169, bei der das FLC-Material mit Hilfe verhältnismäßig hoher Spannungen derart orientiert wird, daß nur eine stabile Lage entsteht, aus der dann durch Anlegen eines elektrischen Feldes über einen Dünnschichttransistor eine Reihe von Zwischenzuständen erzeugt werden, die bei angepaßter Zellengeometrie zwischen gekreuzten Polarisatoren einer Reihe von verschiedenen Helligkeitsgraden (Grauwerten) entsprechen.

Ein Nachteil dieses Vorgehens ist jedoch das Auftreten einer Streifentextur im Display, die den Kontrast und die Helligkeit dieser Zelle begrenzt (siehe Abb. 8 im o.a. Zitat). Die nachteilige Streifentextur läßt sich durch eine Behandlung mit einer hohen elektrischen Spannung (20-50 V) in der nematischen bzw. cholesterischen Phase (siehe S. 168 des o.a. Zitates) zwar korrigieren; jedoch ist eine solche Feldbehandiung nicht für die Massenfertigung von Bildschirmen geeignet und führt in der Regel auch nicht zu temperaturstabilen Texturen. Darüber hinaus ergibt diese Methode lediglich ein Schalten in einem Winkelbereich von bis zu maximal dem einfachen Tiltwinkel, der bei dem von Nito et. al. verwendeten Material bei ca. 22 ° liegt (siehe S. 165 Abb. 6) und damit nur eine Transmission von maximal 50 % der Transmission zweier paralleler Polarisatoren ergibt.

WO 97/04039 betrifft ein ferroelektrisches Flüssigkristallgemisch, das mindestens zwei Verbindungen aus mindestens zwei unterschiedlichen Gruppen von Verbindungen enthält, nämlich 1,3,4-Thiadiazolderivaten und Phenanthrenderivaten. Als weitere Komponenten können 2-Fluorpyridinderivate vorliegen (Komponente C). Zahlreiche bevorzugte 2-Fluorpyridinverbindungen sind genannt, ebenso sind teilweise physikalische Eigenschaften für ausgewählte derartige Verbindungen aufgeführt.

Beschrieben werden ferroelektrische Flüssigkristallmischungen, die eine hohe Schaltgeschwindigkeit bei niedriger Spannung aufweisen. Dabei liegt die Flüssigkristallschicht jedoch nicht als Aktiv-, sondern als Passivmatrix und nicht in Form einer monostabilen

Monodomäne vor. Insbesondere fallen die Schichtennormale z und die Vorzugsrichtung n der nematischen Phase zusammen.

Aufgabe der vorliegenden Erfindung ist die Bereitstellung einer ferroelektrischen Aktiv-Matrix-Flüssigkristallanzeige, die eine ferroelektrische Flüssigkristallmischung enthält, wobei die Flüssigkristallmischung eine monostabile Lage einnimmt, dabei jedoch keine Streifentextur bildet, licht- und temperaturstabil ist und eine sehr hohe Maximaltransmission sowie einen sehr hohen Kontrast ermöglicht.

Die Aufgabe wird erfindungsgemäß gelöst durch ein monostabiles ferroelektrisches Aktivmatrix-Display, enthaltend eine Flüssigkristallschicht in Form einer Monodomäne mit einer eindeutig definierten Richtung der Schichtennormalen z der smC*-Phase, wobei die Schichtennormale z und die Vorzugsrichtung n der nematischen beziehungsweise cholesterischen Phase (N*-Phase einen Winkel von mehr als 5° ausbilden, wobei die Flüssigkristallschicht aus einer Flüssigkristallmischung aus mindestens 5 Verbindungen, die sich zusammensetzt aus
einer achiralen Basismischung, enthaltend mindestens eine Verbindung aus der durch (la - Ik) gebildeten Gruppe (I), gegebenfalls zusätzlich mindestens eine Verbindung der durch (lla - IIg) gebildeten Gruppe und/oder gegebenenfalls mindestens eine Verbindung der Gruppe (III),
und
mindestens einer chiralen Komponente der Gruppe (IV)

**(Ia)** R¹(-A¹-M¹)ₐ(-A²-M²)_{b}-A³-(M⁴-A⁴)_{c}-(M⁵-A⁵)_{d}-R²

in der A³ 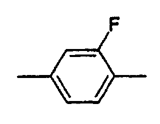 bedeutet und die restlichen Substituenten die nachstehenden Bedeutungen haben

**(Ib)** R¹(-A¹-M¹)ₐ(-A²-M²)_{b}-A³-(M⁴-A⁴)_{c}-(M⁵-A⁵)_{d}-R²

in der A³ 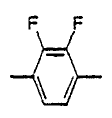 bedeutet und die restlichen Substituenten die nachstehenden Bedeutungen haben

**(Ic)** R¹(-A¹-M¹)ₐ(-A²-M²)_{b}-A³-(M⁴-A⁴)_{c}-(M⁵-A⁵)_{d}-R²

in der A³ 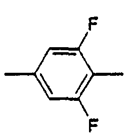 bedeutet und die restlichen Substituenten die nachstehenden Bedeutungen haben

**(Id)** R¹(-A¹-M¹)ₐ(-A²-M²)_{b}-A³-(M⁴-A⁴)_{c}-(M⁵-A⁵)_{d}-R²

in der A³ 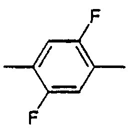 bedeutet und die restlichen Substituenten die nachstehenden Bedeutungen haben

**(Ie)** R¹(-A¹-M¹)ₐ(-A²-M²)_{b}-A³-(M⁴-A⁴)_{c}-(M⁵-A⁵)_{d}-R²

in der A³ 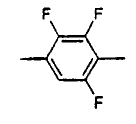 bedeutet und die restlichen Substituenten die nachstehenden Bedeutungen haben

**(If)** R¹(-A¹-M¹)ₐ(-A²-M²)_{b}-A³-(M⁴-A⁴)_{c}-(M⁵-A⁵)_{d}-R²

in der A³ 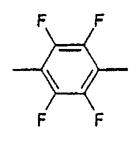 bedeutet und die restlichen Substituenten die nachstehenden Bedeutungen haben

**(Ig)** R¹(-A¹-M¹)ₐ(-A²-M²)_{b}-A³-(M⁴-A⁴)_{c}-(M⁵-A⁵)_{d}-R²

in der A³ 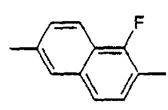 bedeutet und die restlichen Substituenten die nachstehenden Bedeutungen haben

**(Ih)** R¹(-A¹-M¹)ₐ(-A²-M²)_{b}-A³-(M⁴-A⁴)_{c}-(M⁵-A⁵)_{d}-R²

in der A³ 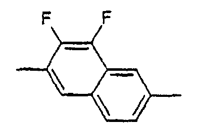 bedeutet und die restlichen Substituenten die nachstehenden Bedeutungen haben

**(Ii)** R¹(-A¹-M¹)ₐ(-A²-M²)_{b}-A³-(M⁴-A⁴)_{c}-(M⁵-A⁵)_{d}-R²

in der A³ 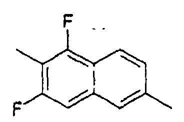 bedeutet und die restlichen Substituenten die nachstehenden Bedeutungen haben
**R**^{**1**}**, R**^{**2**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können mit dem Vorbehalt, daß R¹, R² nicht beide Wasserstoff sein können
**A**^{**1**}**, A**^{**2**}**, A**^{**4**}**, A**^{**5**} unabhängig voneinander gleich oder verschieden 1,4-Phenylen, gegebenenfalls einfach oder zweifach substituiert durch F oder Cl, Cyclohexan-1,4-diyl,gegebenenfalls einfach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
**M**^{**1**}**, M**^{**2**}**, M**^{**4**}**, M**^{**5**}
unabhängig voneinander gleich oder verschieden eine Einfachbindung, -OC(=O)- oder -(O=)C-O-, -OCH₂- oder -CH₂-Ooder -CH₂CH₂-CH₂CH₂ - oder -C≡C-
**a, b,c,d :** Null oder 1 , mit dem Vorbehalt 1 ≤ {a+b+c+d} ≤ 3 und dem Verständnis daß M^{x} eine Einfachbindung ist, wenn der entsprechende Index Null ist

**(Ik)** R¹(-A¹-M¹)ₐ(-A²-M²)_{b}-A³-(M⁴-A⁴)_{c}-(M⁵-A⁵)_{d}-R²

in der A³ 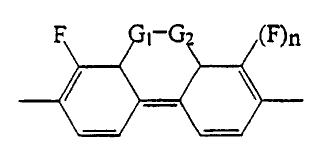 bedeutet und die restlichen Substituenten die nachstehenden Bedeutungen haben:
**R**^{**1**}**, R**^{**2**} unabhängig voneinander gleich oder verschieden Wasserstoff, Alkyl- oder Alkyloxy- mit 2- 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können mit dem Vorbehalt, daß R¹, R² nicht beide Wasserstoff sein können
**G**_{**1**}**-G**_{**2**} -CH=CH- oder -CH₂ -CH₂- bedeutet
**n** Null oder Eins bedeutet
**A**^{**1**}**, A**^{**2**}**, A**^{**4**}**, A**^{**5**} unabhängig voneinander gleich oder verschieden 1,4-Phenylen, gegebenenfalls einfach oder zweifach substituiert durch F oder Cl, Cyclohexan-1,4-diyl,gegebenenfalls einfach substituiert durch F
**M**^{**1**}**, M**^{**2**}**, M**^{**4**}**, M**^{**5**} unabhängig voneinander gleich oder verschieden eine Einfachbindung, -OC(=O)- oder -(O=)C-O-, -OCH₂oder -CH₂-O-, -CH₂CH₂-, -CH₂CH₂-CH₂CH₂ - oder -C≡C-
**a, b,c,d :** Null oder 1 , mit dem Vorbehalt 0<{a+b+c+d}≤2 und dem Verständnis daß M^{x} eine Einfachbindung ist, wenn der entsprechende Index Null ist.

**(IIa)** R³(-A⁷-M⁷)ₐ(-A⁸-M⁸)_{b}-A⁶-(M⁹-A⁹)_{c}-(M¹⁰-A¹⁰)_{d}-R⁴

worin A⁶ 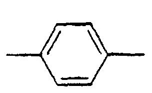 bedeutet.
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder - (O=)C-O- oder -Si (CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden 1,4-Phenylen, Cyclohexan-1,4-diyl, , Cyclohex-1-en-1,4-diyl, Cyclohex-2-en-1,4-diyl, Bicyclo[2.2.2]octan-1,4-diyl,
**M**^{**7**}**, M**^{**8**}**, M**^{**9**}**, M**^{**10**} unabhängig voneinander gleich oder verschieden eine Einfachbindung, -OC(=O)-oder -(O=)C-O- , -OCH₂-oder -CH₂-O-, -CH₂CH₂-, -CH₂CH₂-CH₂CH₂- oder -C≡C-
**a, b,c,d :** Null oder 1 , mit dem Vorbehalt 1≤{a+b+c+d} ≤3 und dem Verständnis daß M^{x} eine Einfachbindung ist, wenn der entsprechende Index Null ist,

**(IIb)** R³(-A⁷-M⁷)ₐ(-A⁸-M⁸)_{b}-A⁶-(M⁹-A⁹)_{c}-(M¹⁰-A¹⁰)_{d}-R⁴

worin **A**^{**6**} 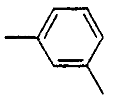 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder - (O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden 1,4-Phenylen, gegebenenfalls einfach oder zweifach substituiert durch F oder Cl, Cyclohexan-1,4-diyl,gegebenenfalls einfach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂ -oder -CH₂-O-, -CH₂CH₂-, -CH₂CH₂-CH₂CH₂- oder -C≡C-
**a, b,c,d** : Null oder 1 , mit dem Vorbehalt 1 ≤ {a+b+c+d} ≤ 3 und dem Verständnis daß M^{x} eine Einfachbindung ist, wenn der entsprechende Index Null ist,

**(IIc)** R³(-A⁷-M⁷)ₐ(-A⁸-M⁸)_{b}-A⁶-(M⁹-A⁹)_{c}-(M¹⁰-A¹⁰)_{d}-R⁴

worin **A**^{**6**} 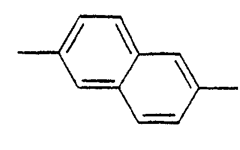 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl mit dem Vorbehalt, daß R³, R⁴ nicht beide Wasserstoff sein können
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂ -oder -CH₂-O-, -CH₂CH₂-, -CH₂CH₂-CH₂CH₂- oder -C=C-
**A**^{**7**}**, A**^{**8**}**, A**^{**9**}**, A**^{**10**} unabhängig voneinander gleich oder verschieden 1,4-Phenylen, gegebenenfalls einfach oder zweifach substituiert durch F oder Cl, Cyclohexan-1,4-diyl,gegebenenfalls einfach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
**a, b,c,d** : Null oder 1 , mit dem Vorbehalt 1≤ {a+b+c+d} ≤ 3 und dem Verständnis daß M^{x} eine Einfachbindung ist, wenn der entsprechende Index Null ist,

**(IId)** R³(-A⁷-M⁷)ₐ(-A⁸-M⁸)_{b}-A⁶-(M⁹-A⁹)_{c}-(M¹⁰-A¹⁰)_{d}-R⁴

worin **A**^{**6**} 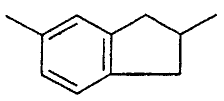 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl
und worin auch ein oder mehrere H-Atome durch F ersetzt sein können mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden 1,4-Phenylen, Cyclohexan-1,4-diyl,gegebenenfalls einfach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Naphthalin-2,6-diyl
**M**^{**7**}**, M**^{**8**}**, M**^{**9**}**, M**^{**10**} unabhängig voneinander gleich oder verschieden eine Einfachbindung, -OC(=O)-oder-(O=)C-O-, -OCH₂-oder -CH₂-O-, -CH₂CH₂ - ,-CH₂CH₂-CH₂CH₂- oder -C≡C-
**a, b,c,d** : Null oder 1 , mit dem Vorbehalt 1≤ {a+b+c+d} ≤ 3 und dem Verständnis daß M^{x} eine Einfachbindung ist, wenn der entsprechende Index Null ist,

**(IIe)** R³(-A⁷-M⁷)ₐ(-A⁸-M⁸)_{b}-A⁶-(M⁹-A⁹)_{c}-(M¹⁰-A¹⁰)_{d}-R⁴

worin **A**^{**6**} 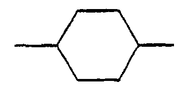 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**}unabhängig voneinander gleich oder verschieden Cyclohexan-1,4-diyl,gegebenenfalls einfach substituiert durch F, Cyclohex-1-en-1,4-diyl, Cyclohex-2-en-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂- oder -CH₂-O-, -CH₂CH₂-, -CH₂CH₂-CH₂CH₂ - oder -C≡C-
**a, b,c,d** : Null oder 1 , mit dem Vorbehalt 1 ≤ {a+b+c+d} ≤ 3 und dem Verständnis daß M^{x} eine Einfachbindung ist, wenn der entsprechende Index Null ist,

**(IIf)** R³(-A⁷-M⁷)ₐ(-A⁸-M⁸)_{b}-A⁶-(M⁹-A⁹)_{c}-(M¹⁰-A¹⁰)_{d}-R⁴

worin **A**^{**6**} 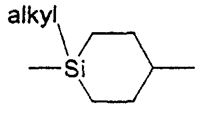 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl
und worin auch ein oder mehrere H-Atome durch F ersetzt sein können mit dem Vorbehalt, daß R³, R⁴ nicht beide Wasserstoff sein können
**A**^{**7**}**, A**^{**8**}**, A**^{**9**}**, A**^{**10**}unabhängig gleich oder verschieden 1,4-Phenylen, Cyclohexan-1,4-diyl,gegebenenfalls einfach substituiert durch F, Cyclohex-1-en-1,4-diyl, Cyclohex-2-en-1,4-diyl, Bicyclo[2.2.2]octan-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂oder -CH₂-O-, -CH₂CH₂ -, -CH₂CH₂-CH₂CH₂ - oder -C≡C-
**a, b,c,d** : Null oder 1 , mit dem Vorbehalt 1≤ {a+b+c+d} ≤ 3 und dem Verständnis daß M^{x} eine Einfachbindung ist, wenn der entsprechende Index Null ist,

**(IIg)** R³(-A⁷-M⁷)ₐ(-A⁸-M⁸)_{b}-A⁶-(M⁹-A⁹)_{c}-(M¹⁰-A¹⁰)_{d}-R⁴

worin **A**^{**6**} 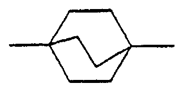 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-C- oder -Si(CH₃)₂- oderCylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden Cyclohexan-1,4-diyl,gegebenenfalls einfach substituiert durch F, Cyclohex-1-en-1,4-diyl, Cyclohex-2-en-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂oder -CH₂-O-, -CH₂CH₂-, -CH₂CH₂-CH₂CH₂- oder -C≡C-
**a, b,c,d** : : Null oder 1 , mit dem Vorbehalt 1≤{a+b+c+d} ≤3 und dem Verständnis daß M^{x} eine Einfachbindung ist, wenn der entsprechende Index Null ist,

**(IIh)** R³(-A⁷-M⁷)ₐ(-A⁸-M⁸)_{b}-A⁶-(M⁹-A⁹)_{c}-(M¹⁰-A¹⁰)_{d}-R⁴

worin **A**^{**6**} 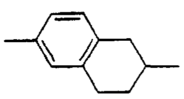 bedeutet
**R**^{**3**}**, R**^{**4**} unabhängig voneinander gleich oder verschieden Wasserstoff, Alkyl- oder Alkyloxy- mit 2- 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden Cyclohexan-1,4-diyl,gegebenenfalls einfach substituiert durch F, Cyclohex-1-en-1,4-diyl, Cyclohex-2-en-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂-oder -CH₂-O-, -CH₂CH₂-, -CH₂CH₂-CH₂CH₂ - oder -C≡C-
**a, b,c,d** : Null oder 1 , mit dem Vorbehalt 1 ≤ {a+b+c+d} ≤ 3 und dem Verständnis daß M^{x} eine Einfachbindung ist, wenn der entsprechende Index Null ist,

**(III)** R⁵(-A¹¹-M¹¹)ₐ(-A¹²-M¹²)_{b}-A¹³

worin **A**^{**13**} 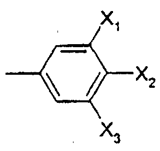 bedeutet
und
**X**^{**1**}**, X**^{**2**}**, X**^{**3**} unabhängig voneinander gleich oder verschieden H, Cl, F, OCF₂H, CF₃ bedeuten mit dem Vorbehalt, daß mindestens eines von X¹, X², X³ nicht H ist,
**R**^{**5**} Wasserstoff, Alkyl- oder Alkyloxy- mit 2- 12 C-Atomen, worin eine oder zwei -CH₂-Gruppen ersetzt sein können durch -CH=CH- oder -OC(=O)- oder -(O=)C-O- oder -Si(CH₃)₂- oder Cylopropan-1,2-diyl
und worin auch ein oder mehrere H-Atome durch F ersetzt sein können
**A**^{**11**}**, A**^{**12**} unabhängig voneinander gleich oder verschieden 1,4-Phenylen, Cyclohexan-1,4-diyl, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
**M**^{**11**}**, M**^{**12**} unabhängig voneinander gleich oder verschieden eine Einfachbindung, -OC(=O)-oder -(O=)C-O-, -OCH₂ -oder -CH₂-O-, -CH₂CH₂-, -CH₂CH₂-CH₂CH₂ - oder -C≡C-
**a, b, d, c** : Null oder 1 , mit dem Vorbehalt 1 ≤ {a+b} ≤ 3 vorzugsweise ≤ 2 und dem Verständnis daß M^{x} eine Einfachbindung ist, wenn der entsprechende Index Null ist,

**(IV)** R⁶(-A¹⁴-M¹⁴)ₐ(-A¹⁵-M¹⁵)_{b}-(M¹⁶-A¹⁶)_{c}-(M¹⁷-A¹⁷)_{d}-M¹⁸-R⁷

worin
**R**^{**6**} Wasserstoff, Alkyl- oder Alkyloxy- mit 2- 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl
und worin auch ein oder mehrere H-Atome durch F ersetzt sein können,
**R**^{**7**} eine Gruppierung mit mindestens einem asymmetrischen C-atom, das entweder Bestandteil ist einer Alkylgruppe von 3-12 C-Atomen, worin auch eine oder zwei -CH₂-Gruppen ersetzt sein können durch -O- oder -OC(=O) oder -(O=)C-O- und worin -CH_{3,} -CF_{3,} -OCH_{3,} -CH_{3,} Cl , F einer der Substituenten des asymmetrischen C-Atoms sein müssen,
oder Bestandteil ist eines 3-7-gliedrigen Carbocyclus, worin auch eine oder zwei nicht benachbarte -CH₂-Gruppen durch -O- oder eine -CH₂-Gruppe durch -OC(=O)- oder -(O=)C-O- ersetzt sein können.
**A**^{**14**}**, A**^{**15**}**, A**^{**16**}**, A**^{**17**} unabhängig voneinander gleich oder verschieden 1,4-Phenylen, 1,3-Phenylen, jeweils gegebenenfalls einfach oder zweifach substituiert durch F oder Cl, Cyclohexan-1,4-diyl,gegebenenfalls einfach substituiert durch F oder CN, Cyclohex-1-en-1,4-diyl, 1-Fluorcyclohex-1-en-1,4-diyl, Cyclohex-2-en-1,4-diyl, 2-Oxocyclohexan-1,4-diyl, 2-Cyclohexen-1-on-3,6-diyl,1-Alkyl-1-silacyclohexan-1,4-diyl, Bicyclo[2.2.2]octan-1,4-diyl, Spiro[4.5]decan-2,8-diyl, Spiro[5.5]undecan-3,9-diyl, Indan-2,6-diyl, Naphthalin-2,6-diyl, gegebenenfalls einfach oder zweifach substituiert durch F oder CN, Pyrimidin-2,5-diyl, Pyridin-2,5-diyl, Pyrazin-2,5-diyl, Pyridazin-3,6-diyl, Chinolin-2,6-diyl, Chinolin-3,7-diyl, Isochinolin-3,7-diyl, Chinazolin-2,6-diyl, Chinoxalin-2,6-diyl, 1,3-Dioxan-2,5-diyl, Thiophen-2,4-diyl, Thiophen-2,5-diyl, 1,3-Thiazol-2,4-diyl, 1,3-Thiazol-2,5-diyl, Benzthiazol-2,6-diyl, 1,3,4-Thiadiazol-2,5-diyl, Piperidin-1,4-diyl, Piperazin-1,4-diyl
**M**^{**14**}**, M**^{**15**}**, M**^{**16**}**, M**^{**17**} unabhängig voneinander gleich oder verschieden eine Einfachbindung, -OC(=O)- oder -(O=)C-O-, -OCH₂-, -CH₂-O-, -CH₂CH₂-, -CH₂CH₂-CH₂CH₂- oder -C≡C-
**M**^{**18**} eine Einfachbindung, falls das asymmetrische C-Atom Teil einer Alkylkette ist,
und eine Einfachbindung, -OCH₂-, -CH₂O-, -OC(=O)- oder -C(=O)O- für den Fall, daß das asymmetrische C-Atom Bestandteil des bei R⁷ definierten Carbocyclus ist
**a, b,c,d :** Null oder 1 , mit dem Vorbehalt 1≤{a+b+c+d}≤3 und dem Verständnis, daß M^{x} eine Einfachbindung ist, wenn der entsprechende Index Null ist,
aufgebaut ist.

Bevorzugte Mischungen weisen eines oder mehrere der nachfolgenden Merkmale auf:
- R¹ und R² bzw. R³ und R⁴ bedeuten geradkettiges Alkyl- oder Alkyloxy mit 2 bis 12 C-Atomen.
- die Mischung enthält mindestens eine Verbindung bei der in R¹ oder R² oder R³ oder R⁴ eine nicht-terminale -CH₂-Gruppe durch -OC(=O) ersetzt ist.
- in mindestens einer Verbindung der Formel (I) oder (II) ist bei R¹ und/oder R² und/oder R³ oder R⁴ mindestens eine oder mehrere, nicht jedoch die dem Kern benachbarte - CH₂-Gruppe durch -CF₂- ersetzt.
- in mindestens einer Verbindung der Formeln (I) oder (II) bedeutet R¹ oder R² oder R³ oder R⁴ Wasserstoff
- R⁷ ist sek-Alkyl- oder sek-Alkyloxy- mit 4 bis 12 C-Atomen
- R⁷ ist 2-Methyl-alkyl- oder 2-Methyl-alkyloxy- oder 2-Methyl-alkylcarbonyloxy oder 2-Methyl-alkyloxycarbonyl mit 4 bis 12 C-Atomen
- R⁷ ist 2-Fluoro-alkyl- oder 2-Fluor-alkyloxy- oder 2-Fluor-alkylcarbonyloxyoder 2-Fluor-alkyloxycarbonyl mit 3 bis 12 C-Atomen
- R⁷ ist 2-Trifluormethyl-alkyl- oder 2-Trifluormethyl-alkyloxy- oder 2-Trifluormethyl-alkylcarbonyloxy- oder 2-Trifluormethyl-alkyloxycarbonyl mit 3 bis 12 C-Atomen
- R⁷ enthält die Gruppierung [-O-CH(CH₃)-C(=O)O-] als Teil einer Alkylkette
- R⁷ enthält die Gruppierung -C(=O)O- als Teil eines 5- oder 6-gliedrigen .Cyclus
- R7 enthält die Gruppierung Oxiran-2,3-diyl

Die achirale Basismischung kann zusätzlich mindestens eine eine Phenylpyrimidin-, Fluorphenyl-pyrimidin-, Difluorphenyl-pyrimidin-, Phenylpyridin-, Fluorphenyl-pyridin oder Difluorphenyl-pyridin-Gruppen aufweisende Verbindung enthalten. Dabei können vorzugsweise 3 oder mehr dieser Verbindungen vorliegen. Bevorzugt sind die (Difluor)phenylpyrimidingruppen aufweisenden achiralen Verbindungen. Zusätzlich können Verbindungen mit Benzthiazol-2,6-diyl- oder Thiophen-2,5-diyl-Gruppen enthalten sein.

Die achirale Basismischung kann enthalten mindestens eine Verbindung, die ein Fluoratom enthält, mindestens eine Verbindung, die zwei Fluoratome enthält, wobei gegebenenfalls mindestens eine der Verbindungen zusätzlich eine heterocyclische Gruppe enthält.

Sie kann vorzugsweise mindestens eine Verbindung der Formel (la), mindestens eine Verbindung der Formel (Ib) und vorzugsweise mindestens eine Verbindung der Formel (Ig) enthalten. Dabei kann eine der oben genannten heterocyclischen Gruppen zusätzlich in den Verbindungen vorliegen.

Der Heterocyclenanteil in der Flüssigkristallmischung kann mehr als 20 Gew.-%, vorzugsweise mehr als 30 Gew.-%, besonders bevorzugt mehr als 40 Gew.-%, bezogen auf die gesamte Flüssigkristallmischung, betragen. Dies sind vorzugsweise mindestens zwei Phenylpyrimidine bzw. Difluorphenylpyrimidine und mindestens eine Verbindung mit Benzthiazol-2,6-diyl-Einheit und mindestens eine Verbindung mit Thiophen-2,5-diyl-Einheit.

Die Basismischung kann mindestens eine, vorzugsweise mindestens zwei, besonders bevorzugt mindestens drei Difluorterphenylverbindungen enthalten.

Bei den chiralen Verbindungen der allgemeinen Formel (IV) kann das chirale Zentrum vorzugsweise in einer Fluoralkyl-, (Trifluormethyl)-alkyl- oder Methylalkylgruppe oder Oxiraneinheit vorliegen.

Das erfindungsgemäße Aktivmatrix - FLCD enthält als optisch wirksame Schicht ein ferroelektrisch flüssigkristallines Medium (Flüssigkristallphase) mit einer Phasenfolge von
Isotrop - Nematisch oder Cholesterisch (N*)- smektisch C*
oder einer Phasenfolge
Isotrop - Nematisch oder Cholesterisch (N*)- smektisch A *- smektisch C*, wobei die smektisch A* Phase einen Existenzbereich (Phasenbereich) von maximal 2 °C, vorzugsweise maximal 1°C, besonders bevorzugt maximal 0.5°C besitzt. Der Stern (*) an der Phasenbezeichnung gibt an, daß es sich um eine chirale Phase handelt.

Die FLC-Mischungen weisen hohe Werte für Widerstand und Spannungshaltevermögen (voltage-retaining-ability) auf.

Die Herstellung der Displays erfolgt vorzugsweise nach einem Verfahren, bei dem man die Flüssigkristallschicht in den Zwischenraum zwischen einer geriebenen Obersubstratplatte und einer geriebenen Untersubstratplatte des Aktiv-Matrix-Displays einbringt, wobei die Reiberichtungen auf der Ober- und Untersubstratplatte im wesentlichen parallel sind, und die Flüssigkristallphase aus der isotropen Phase abkühlt, wobei zumindest beim Phasenübergang N* → smC* beziehungsweise N* → smA* → smC* eine elektrische Gleichspannung am Display anliegt.

Die FLC-Mischung wird in ein Aktivmatrix-Display gefüllt. Die Herstellung und die Komponenten eines solchen AM-Displays ist ausführlich in der vorstehend aufgeführten Literatur von Tsukuda, beschrieben. Die Dicke der FLC-Schicht beträgt jedoch anders als bei nematischen Displays nur 0,7 bis 2,5, bevorzugt 1-2 µm. Darüber hinaus sind üblicherweise die Reiberichtungen auf Ober- und Untersubstratplatten im wesentlichen parallel . Der Begriff "im wesentlichen parallel" schließt antiparallele oder schwach, d.h. bis zu 10° gekreuzte Reiberichtungen mit ein.

Wichtig für die Funktionsweise dieses Displays ist nun, daß bei der Herstellung des Displays beim kontrollierten Abkühlen eine elektrische Gleichspannung, vorzugsweise unterhalb 5 V, angelegt und beim Phasenübergang N* --> smC* bzw. N--> smA* --> smC* beibehalten wird, die dazu führt, daß das gesamte Display eine monostabile Monodomäne einnimmt, die zwischen gekreuzten Polarisatoren vollkommen dunkel erscheint.

Nach Erhalt dieser Domäne wird die Gleichspannung abgeschaltet. Die so erhaltene Textur ist im Gegensatz zu Hartmanns oben angeführtemAnsatz oder im Gegensatz zu konventionellen bistabilen FLCD monostabil. Dies bedeutet, daß sich der bevorzugte n-Direktor (der die Vorzugsrichtung der Moleküllängsachsen angibt), in Reibrichtung der Zelle befindet, wohingegen der z-Direktor (der die Vorzugsrichtung der smektischen Lagennormale angibt) sich ungefähr um den Betrag des Tiltwinkels schräg zur Reiberichtung befindet. Diese Konstellation ist gerade entgegengesetzt zur gewöhnlichen bistabilen Zelle nach Clark und Lagerwall, bei der der z-Direktor in Reiberichtung liegt.

Im Unterschied zu Nitos Ansatz gibt es bei dieser Orientierung gerade keine zwei Lagennormalen und damit keine zwei Orientierungsdomänen, die letztlich zu der oben erwähnten störenden Streifentextur führen, sondern nur eine eindeutige Richtung des z-Direktors und daher eine Monodomäne. Darüber hinaus ist nun der zweifache Tiltwinkel, der zu 100% Transmission bezogen auf parallele Polarisatoren führt, zugänglich, d.h. es wird eine doppelte Helligkeit erzielt.

Das so erhaltene Display erscheint bei geeignetem Drehwinkel zwischen gekreuzten Polarisatoren vollkommen dunkel. Bei Anlegen einer Ansteuerspannung von nur wenigen Volt erscheint es hell, wobei die Helligkeit über die Spannung kontinuierlich variiert werden kann und bei Sättigung nahezu die Helligkeit zweier paralleler Polarisationsfolien besitzt. Ein wichtiges Merkmal dieses Displays ist, daß der Winkel zwischen der Vorzugsrichtung der nematischen (bzw. cholesterischen) Phase und der Schichtennormale (z-Direktor) im Idealfall gleich dem Tiltwinkel der smektischen C-Phase ist, bzw. zumindest im wesentlichen gleich dem Tiltwinkel ist. "Im wesentlichen" im Sinne dieser Erfindung bedeutet vorzugsweise einen Wertebereich vom halben bis zum vollen, besonders bevorzugt 0,8- bis 1-fachen Tiltwinkel, jedoch mindestens von 5°.

Das erfindungsgemäße ferroelektrische Aktivmatrix-Flüssigkristalldisplay ist in hohem Maße praxistauglich, insbesondere für TV und HDTV oder Multimedia, da es hohe Transmission, kurze Schaltzeit, Grauskala und daher volle Farbfähigkeit, kostengünstige Herstellung und einen weiten Temperaturbereich miteinander vereinbart. Darüber hinaus läßt sich das Display bei Spannungen von ≤ 10 Volt, bevorzugt ≤ 8 V, besonders bevorzugt ≤ 5 V betreiben.

Insbesondere wird unter Aktivmatrixdisplay im Sinne der vorliegenden Erfindung auch ein LCD verstanden, bei dem eines der beiden Substrate durch die Rückseite eines IC-Chips (IC = integrated circuit) ersetzt wird, wie beispielsweise bei D.M. Walba, Science 270, 250-251(1993) oder http://www.displaytech.com beschrieben.

Die spontane Polarisation des erfindungsgemäßen Aktiv-Matrix-FLCD liegt vorzugsweise unterhalb 15 nC/cm², bevorzugt im Bereich von 0,01 bis 10 nC/cm² bei der Betriebstemperatur des Displays.

Vorzugsweise beträgt in der Flüssigkristallschicht die Länge der chiral-nematischen beziehungsweise cholesterischen Ganghöhe (pitch) in einem Temperaturbereich von mindestens 2°C oberhalb des Übergangs zur smektischen Phase mehr als 50 µm.

Die Displays können beispielsweise im TV-, HDTV- oder Multi-media-Bereich oder im Bereich der Informationsverarbeitung eingesetzt werden, z.B. in Notebook-PCs, Personal Digital Assistants oder Desktop-Monitoren.

Die Herstellungsverfahren der für die erfindungsgemäßen Mischungen geeigneten Materialien sind im Prinzip bekannt, ebenso wie die Herstellung von Flüssigkristallmischungen aus den Einzelkomponenten.
So sind z.B. Verbindungen der jeweiligen nachstehenden Formeln beschrieben in:
**(Ia)** EP-B-0 210215 und GB-B 2198743
**(Ib)** EP-B-0 210 215 sowie aus JP-B 2732765
**(Ic)** Gray et al., Mol. Cryst.Liq. Cryst. 1991, vol. 204, pp.43-64
**(Id)** Gray et al., Mol. Cryst.Liq. Cryst. 1991, vol. 204, pp.43-64
**(Ie)** EP-B 602596
**(If)** Xu et al., Liq. Cryst. 1995, 18(1), 105-8
**(Ig)** JP-A 09052859
**(Ih)** DE-A 19522167
**(Ii)** *DE-A-196 52252*
**(Ik)** US 5,648,021
**(IIa)** Flüssige Kristalle in Tabellen II, pp. 269-304
**(IIb)** US 5,447,656
**(IIc)** Flüssige Kristalle in Tabellen II, pp- 313-322
**(IId)** EP-A-0 546 338
**(IIe)** Flüssige Kristalle in Tabellen II, pp. 32-72
**(Iif)** EP-A-0 761 674, 742 222, 732 335, 727 428 etc.
**(IIg)** Flüssige Kristalle in Tabellen II , pp. 85-95
**(III)** EP-A-0 832 954
**(IV)** chirale Dotierstoffe mit
   oxiran- als Einheit mit asymmetrischem C-Atom EP-B-0 292 954 / 263 437
   dioxolan- als Einheit mit asymmetrischem C-Atom EP-B-0 351 746 / 361 272
   2,3-Difluoralkyloxy- als Einheit mit asymmetrischem C-Atom US 5,051,506
   2-Fluoralkyloxy- als Einheit mit asymmetrischem C-Atom US 4,798,680
   α-chlorocarboxylat- als Einheit mit asymmetrischem C-Atom US 4,855,429
α-fluorocarboxylat- als Einheit mit asymmetrischem C-Atom Arakawa et al., Liquid Crystals 1997, vol. 23, no.5, pp. 659-666
Methyl-verzweigte Alkylketten als Einheit mit asymmetrischem C-Atom EP-B-0 201 578, 211 030
Lactone als Einheit mit asymmetrischem C-Atom z.B. US 5,061,398, 5,256,330 , 5,026,506
sowie Verbindungen mit den Strukturelementen
- silylalkyl-: aus EP-B-0 366561
- cyclopropylalkyl-: aus EP-B-0 318423 / 398155
- perfluroalkyl-: aus Ferroelectrics 1988, 85, 375-384 bzw. US 4,886,619 , 5,082,587 , 5,254,747, 5,262,082 , 5,437,812 oder 5,482,650
- perflurocyclohexyl: aus DE-A-197 48818

### Beispiele:

### Beispiel 1

Die besondere Eignung der erfindungsgemäßen Verbindungen als Komponenten von ferroelektrischen Flüssigkristallmischungen für Aktivmatrix-Displays wird durch nachstehende Messungen belegt, bei denen die erfindungsgemäßen Verbindungen im Vergleich zu anderen, ebenfalls als Komponenten ferroelektrischer Flüssigkristallmischungen vorgeschlagenen Komponenten untersucht werden.

Dabei wird mittels einer einschlägigen Meßanordnung der Widerstand nachfolgender Komponenten gemessen.
a) **2-(4-Octyloxyphenyl)-5-octyl-pyrimidin**
   (Synthese nach DD-WP 95892, Reinigung nach Nagashima et al..,Liq.Crystals 1997, vol.4, pp.537-546)
b) **2-(4-Ethylphenyl)-5-(4-octylphenyl)-(1,3,4)-thiadiazol**
   (Synthese/Reinigung nach EP-B309514)
c)**5-(4-Nonanoyloxy-phenyl)-2-(4-hexylphenyl)-1,3-thiazol**
   (Synthese/Reinigung nach EP-B 439170)
d) **2'-Fluor- 4-octyloxy-4''-pentyl-terphenyl Beispiel für Verbindung (Ia)**
   (Synthese/Reinigung nach GB-B 2198743)
e) **2,3-Difluor-4-heptyl-4''-pentyl- terphenyl Beispiel für Verbindung (Ib)**
   (Synthese/Reinigung nach EP-B 329752)
f) **4-Decyl-2,3-difluor-4''-pentyl-terphenyl Beispiel für Verbindung (Ib)**
   (Synthese/Reinigung nach EP-B 329752)
g) **2',3'-Difluor-4-hexyloxy-4''-pentyl-terphenyl Beispiel für Verbindung (Ib)**
   (Synthese/Reinigung nach EP-B 329752)
h) **4-(Cyclohexyl)cyclohexan-carbonsäure-(4-octyloxy)phenyl-ester Beispiel für Verbindung (IIa)** 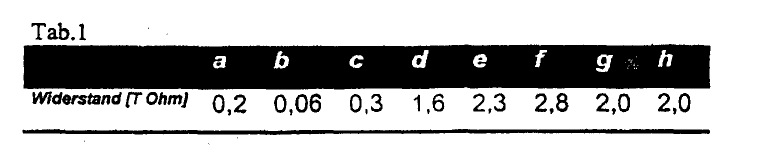
   Tabelle 1 belegt die besondere Eignung der erfindungsgemäßen Verbindungen für die Erstellung von ferroelektrischen Flüssigkristallmischungen für Aktivmatrixdisplays, da für die erfindungsgemäßen Materialien durch Standardoperationen höhere Werte des Widerstandes zu erreichen sind, somit auch Mischungen mit hohem Spannungshaltevermögen realisiert werden können.

### Beispiel 2

Eine chiral-smektische Flüssigkristallmischung mit der Phasenfolge -12 (unterkühlbar bis -30) S_{c} * 77.5 N 102,5-104,9 I, einer Spontanpolarisation von 4,1 nC/cm² und bestehend aus

| | |
|---|---|
| 5-Decyl-2-(4-octyloxyphenyl)pyrimidin | 8,1 Gew.-% |
| 2-(4-Decyloxyphenyl)-5-octyl-pyrimidin | 8,1 Gew.-% |
| (S)-5-Decyl-2-[4-(2-fluor-decyloxy)phenyl]pyrimidin | 4 Gew.-% |
| 5-Nonyl-2-(4-octyloxyphenyl)pyrimidin | 8,1 Gew.-% |
| 4'-Octyl-biphenyl-4-yl-carbonsäure-(2-fluor-4-pentylphenyl)ester | 8,1 Gew.-% |
| (S)-3-[4-(4-Methylhexyl)phenyl)-6-(4-pentyloxyphenyl)fluorbenzol | 8,1 Gew.-% |
| 2-(2,3-Difluor-4-octyloxy)phenyl-1 -fluor-6-octyl-naphthalin | 8,1 Gew.-% |
| 2,3-Difluor-4-nonyl-4"-pentyl-terphenyl | 4,1 Gew.-% |
| 2,3-Difluor-4-hexyloxy-4"-octyl-terphenyl | 6,1 Gew.-% |
| 2,3-Difluor-4-heptyloxy-4"-pentyl-terphenyl | 6,1 Gew.-% |
| 2,3-Difluor-4"-heptyl-4-pentyloxy-terphenyl | 6,1 Gew.-% |
| 2',3'-Difluor-4-heptyl-4"-octyloxy-terphenyl | 10,1 Gew.-% |
| 4-(5-Dodecyl-pyrimidin-2-yl)phenyl-(trans-4-hexylcyclohexan)carbonsäureester | 15 Gew.-% |

wird in einer Testzelle auf ihre elektro-optischen Eigenschaften hin untersucht. Die Testzelle hat den Elektrodenabstand 1.3 µm (Mikrometer), die Indium-Zinnoxidelektroden (ITO) sind mit der Orientierungsschicht LQT-120 von Hitachi Chemicals versehen.

Zunächst wird das Transmissions-Spannungsdiagramm bestimmt. Dazu wird die gefüllte Testzelle durch Abkühlen orientiert, wobei im Temperaturbereich von 80°C bis 70°C eine Gleichspannung von 3 Volt angelegt wird, wodurch eine monostabile Monodomäne entsteht, die in einem Polarisationsmikroskop zwischen gekreuzten Polarisatoren bei optimalem Drehwinkel völlig dunkel erscheint. Es wird nun das elektro-optische Verhalten der Zelle mittels monopolarer und rechteckiger Ansteuerpulse untersucht.

Zunächst werden monopolare Spannungsimpulse der Breite 10 ms angelegt, und die Transmission wird als Funktion der Spannung gemessen. Man erhält bei 30°C folgendes Ergebnis:

| Spannung in V | Transmission (Photodiodensignal in mV) |
|---|---|
| 0 | 0 |
| 1 | 10 |
| 2 | 60 |
| 3 | 240 |
| 4 | 330 |
| 5 | 420 |

Der Wert 420 mV entspricht einer Transmission von ca. 70% der Transmission zweier paralleler Polarisatoren und von ca 85% unter Bezug auf die maximale Transmission der leeren Testzelle.

Anschließend wurde die Schaltzeit der Zelle (Einschaltzeit für monopolare Pulse bzw. Ein/Ausschaltzeit für Rechteckspannung) untersucht mit folgenden Ergebnissen (30°C):

| Spannung in V | Schaltzeit in ms (t10-90) Rechteckspannung 60 Hz | Schaltzeit in ms (t10-90) Monopolare Pulse 10 ms |
|---|---|---|
| 2 | 1.35 | 1.5 |
| 3 | 1.15 | 0.95 |
| 4 | 0.70 | 0.60 |
| 5 | 0.48 | 0.42 |

Die Ergebnisse belegen die für Videoanwendungen völlig ausreichende hohe Schaltgeschwindigkeit bei Aktivmatrixansteuerung sowie die kontinuierliche Grauskala. Darüber hinaus wurden bis zu einer Spannung von 6 Volt keinerlei 'image sticking' Effekte oder 'boats', also störende Rückschalteffekte beobachtet.

### Beispiel 3

Eine chiral-smektische Flüssigkristallmischung mit den Phasenübergängen S_{c}* - N 72°C und N - I 96 - 100°C, einer Spontanpolarisation von 3,8 nC/cm² und bestehend aus

| | |
|---|---|
| 2-(2,3-Difluor-4-heptyloxyphenyl)-5-nonylpyrimidin | 8,1 Gew.-% |
| 2-(2,3-Difluor-4-octyloxyphenyl)-5-nonyl-pyrimidin | 8,1 Gew.-% |
| 2-(2,3-Difluor-4-nonyloxyphenyl)-5-nonyl-pyrimidin | 8,1 Gew.-% |
| (S)-5-Decyl-2-[4-(2-fluor-decyloxy)phenyl]pyrimidin | 4 Gew.-% |
| 4'-Octyl-biphenyl-4-yl-carbonsäure-(2-fluor-4-pentylphenyl)ester | 8,1 Gew.-% |
| (S)-3-[4-(4-Methylhexyl)phenyl)-6-(4-pentyloxyphenyl)fluorbenzol | 8,1 Gew.-% |
| 2-(2,3-Difluor-4-octyloxy)phenyl-1-fluor-6-octyl-naphthalin | 8,1 Gew.-% |
| 2,3-Difluor-4-nonyl-4"-pentyl-terphenyl | 4,1 Gew.-% |
| 2,3-Difluor-4-hexyloxy-4"-octyl-terphenyl | 6,1 Gew.-% |
| 2,3-Difluor-4-heptyloxy-4"-pentyl-terphenyl | 6,1 Gew.-% |
| 2,3-Difluor-4"-heptyl-4-pentyloxy-terphenyl | 6,1 Gew.-% |
| 2',3'-Difluor-4-heptyl-4"-octyloxy-terphenyl | 10,1 Gew.-% |
| 4-(5-Dodecyl-pyrimidin-2-yl)phenyl-(trans-4-hexylcyclohexan)carbonsäureester | 15 Gew.-% |

liefert in einer Meßanordnung analog Beispiel 2 die folgenden Werte:

| Spannung in V | Transmission (in %) 100% = parallel polarisers |
|---|---|
| 0 | 0 |
| 1,5 | 1 |
| 2 | 8 |
| 2,25 | 11 |
| 2,5 | 20 |
| 3 | 34 |
| 3,25 | 40 |
| 3,5 | 46 |
| 4 | 55 |
| 4,5 | 60 |
| 5 | 65 |
| 5,5 | 68 |
| 6 | 72 |
| 6,5 | 73 |
| 7 | 74 |

| Spannung in V | Schaltzeit in ms (t10-90) Rechteckspannung 60 Hz bei 30°C | Relaxationszeit in ms (t90-10) Rechteckspannung 60 Hz bei 30°C | Schaltzeit in ms (t10-90) Rechteckspannung 60 Hz bei 50°C |
|---|---|---|---|
| 3 | 1,43 | 0,155 | 1,21 |
| 4 | 0,75 | 0,139 | 0,54 |
| 5 | 0,53 | 0,132 | 0,4 |
| 6 | 0,4 | 0,123 | 0,3 |
| 7 | 0,31 | 0,116 | kein Meßwert |

### Beispiel 4

Eine chiral-smektische Flüssigkritallmischung enthaltend [Gew.-%]

| | |
|---|---|
| 2-(4-Decyloxyphenyl)-5-octyl-pyrimidin | 12,6% |
| 5-Octyl-2-(4-octyloxyphenyl)pyrimidin | 15,9% |
| 2-(4-Hexyloxyphenyl)-5-octyl-pyrimidin | 16,5% |
| 2-(2,3-Difluor-4-heptyloxy-phenyl)-5-nonyl-pyrimidin | 7,0% |
| 2-(2,3-Difluor-4-octyloxy-phenyl)-5-nonyl-pyrimidin | 7,0% |
| 2-(2,3-Difluor-4-nonyloxy-phenyl)-5-nonyl-pyrimidin | 7,0% |
| 5-Octyl-2-(4'-propyl-biphenyl-4-yl)pyrimidin | 12,5% |
| [trans-4-Pentylcyclohexancarbonsäure-[4-(4-heptyl-2-fluorphenyl]phenylester | 20,0% |
| (2R,3R)-3-Propyl-oxirancarbonsäure-[4-(5-octyloxy-pyrimidin-2-yl)phenylester | 1,5% |

mit der Phasenfolge 181.0-79.2 N* 54,7 Sc* ergibt eine Monodomäne, worin der Winkel (zwischen der Schichtennormalen z und der Vorzugsrichtung n der nematischen/cholesterischen Phase) 9.2° beträgt (60Hz, 20V) und eine Transmission (5V, 60Hz) von 68,4% des Wertes zweier paralleler Polarisatoren in der vorstehend beschriebenen Meßanordnung.

### Beispiel 5

Die Mischung aus Beispiel 4, jedoch 20% Nonansäure-[2',3'-difluor-4"-Heptylterphenyl-4-yl]ester enthalten anstelle von trans-4-Pentylcyclohexancarbonsäure-[4-4(-heptyl-2-fluorphenyl]phenylester, hat die Phasenfolge I 79,8-77,4 N* 61,0 Sc und in der Monodomäne einem Wert für Δ (20V,60Hz) von 9,6° und eine Transmission (5V, 60Hz) von 73,6% des Wertes zweier paralleler Polarisatoren.

### Beispiel 6

Die Mischung aus Beispiel 4, jedoch 20% 3'-Fluor-4'-octyloxy-triphenyl-1,1'-4-carbonsäure-(2-fluor-4-heptylphenyl)ester enthaltend anstelle von trans-4-Pentylcyclohexancarbonsäure-[4-4-heptyl-2-fluorphenyl]phenylester, hat die Phasenfolge I 80,5-79,0 N* 60,2 Sc* und in der Monodomäne einen Wert fürΔ (20V, 60Hz)von 12,4° und eine Transmission(5V, 60Hz) von 77,2% des Wertes zweier paralleler Polarisatoren.

## Patentansprüche

1. Monostabiles ferroelektrisches Aktivmatrix-Display, enthaltend eine Flüssigkristallschicht in Form einer Monodomäne mit einer eindeutig definierten Richtung der Schichtennormalen z der smC*-Phase, **dadurch gekennzeichnet, daß** die Schichtennormalen z und die Vorzugsrichtung n der nematischen beziehungsweise cholesterischen Phase (N*-Phase) einen Winkel von mehr als 5° ausbilden, wobei die Flüssigkristallschicht aus einer Flüssigkristallmischung aus mindestens 5 Verbindungen, die sich zusammensetzt aus einer achiralen Basismischung, enthaltend mindestens eine Verbindung aus der durch (Ia - Ik) gebildeten Gruppe (I), gegebenfalls zusätzlich mindestens eine Verbindung der durch (IIa - IIg) gebildeten Gruppe und/oder mindestens eine Verbindung der Gruppe (III),
und
mindestens einer chiralen Komponente der Gruppe (IV)
**(Ia)** R¹(-A¹-M¹)ₐ(-A²-M²)_{b}A³-(M⁴-A⁴)_{c}-(M⁵-A⁵)_{d}-R²
in der A³ 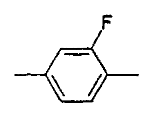 bedeutet und die restlichen Substituenten die nachstehenden Bedeutungen haben
**(Ib)** R¹(-A¹-M¹)ₐ(-A²-M²)_{b}-A³-(M⁴-A⁴)_{c}-(M⁵-A⁵)_{d}-R²
in der A³ 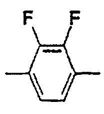 bedeutet und die restlichen Substituenten die nachstehenden Bedeutungen haben
**(Ic)** R¹(-A¹-M¹)ₐ(-A²-M²)_{b}-A³-(M⁴-A⁴)_{c}-(M⁵-A⁵)_{d}-R²
in der A³ 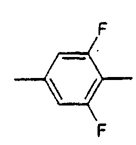 bedeutet und die restlichen Substituenten die nachstehenden Bedeutungen haben
**(Id)** R¹(-A¹-M¹)ₐ(-A²-M²)_{b}-A³-(M⁴-A⁴)_{c}-(M⁵-A⁵)_{d}-R²
in der A³ 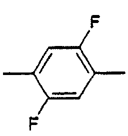 bedeutet und die restlichen Substituenten die nachstehenden Bedeutungen haben
**(Ie)** R¹(-A¹-M¹)ₐ(-A²-M²)_{b}-A³-(M⁴-A⁴)_{c}-(M⁵-A⁵)_{d}-R²
in der A³ 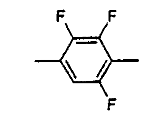 bedeutet und die restlichen Substituenten die nachstehenden Bedeutungen haben
**(If)** R¹(-A¹-M¹)ₐ(-A²-M²)_{b}-A³-(M⁴-A⁴)_{c}-(M⁵-A⁵)_{d}-R²
in der A³ 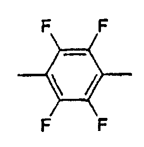 bedeutet und die restlichen Substituenten die nachstehenden Bedeutungen haben
**(Ig)** R¹(-A¹-M¹)ₐ(-A²-M²)_{b}-A³-(M⁴-A⁴)_{c}-(M⁵-A⁵)_{d}-R²
in der A³ 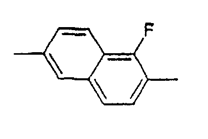 bedeutet und die restiichen Substituenten die nachstehenden Bedeutungen haben
**(Ih)** R¹(-A¹-M¹)ₐ(-A²-M²)_{b}-A³-(M⁴-A⁴)_{c}-(M⁵-A⁵)_{d}-R²
in der A³ 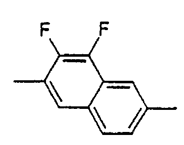 bedeutet und die restlichen Substituenten die nachstehenden Bedeutungen haben
**(Ii)** R¹(-A¹-M¹)ₐ(-A²-M²)_{b}-A³-(M⁴-A⁴)_{c}-(M⁵-A⁵)_{d}-R²
in der A³ 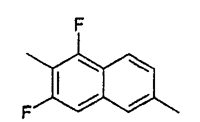 bedeutet und die restlichen Substituenten die nachstehenden Bedeutungen haben
**R**^{**1**}**, R**^{**2**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können mit dem Vorbehalt, daß R¹, R² nicht beide Wasserstoff sein können
**A**^{**1**}**, A**^{**2**}**, A**^{**4**}**, A**^{**5**}
unabhängig voneinander gleich oder verschieden 1,4-Phenylen, gegebenenfalls einfach oder zweifach substituiert durch F oder Cl, Cyclohexan-1,4-diyl,gegebenenfalls einfach substituiert durch F, Cyclohex-1-en-1,4-diyl, Cyclohex-2-en-1,4-diyl, 1-Alkyl-1-silacyclohexen-1,4-diyl, Bicyclo[2.2.2]octan-1,4-diyl, Indan-2,6-diyl, Naphthalin-2,6-diyl
**M**^{**1**}**, M**^{**2**}**, M**^{**4**}**, M**^{**5**}
unabhängig voneinander gleich oder verschieden eine Einfachbindung, -OC(=O)- oder (O=)C-O-, -OCH₂- oder -CH₂O oder -CH₂CH₂CH₂CH₂ - oder -C≡C-
**a, b,c,d** : Null oder 1 , mit dem Vorbehalt 1 ≤ {a+b+c+d} ≤ 3 und dem Verständnis daß M^{x} eine Einfachbindung ist, wenn der entsprechende Index Null ist
**(Ik)** R¹(-A¹-M¹)ₐ(-A²-M²)_{b}-A³-(M⁴-A⁴)_{c}-(M⁵-A⁵)_{d}-R²
in der A³ 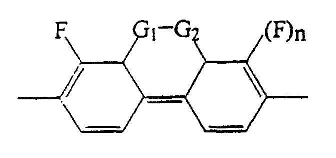 bedeutet und die restlichen Substituenten die nachstehenden Bedeutungen haben:
**R**^{**1**}**, R**^{**2**} unabhängig voneinander gleich oder verschieden Wasserstoff, Alkyl- oder Alkyloxy- mit 2- 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können mit dem Vorbehalt, daß R¹, R² nicht beide Wasserstoff sein können
**G**_{**1**}**-G**_{**2**} -CH=CH- oder -CH₂-CH₂- bedeutet
**n** Null oder Eins bedeutet
**A**^{**1**}**, A**^{**2**}**, A**^{**4**}**, A**^{**5**} unabhängig voneinander gleich oder verschieden 1,4-Phenylen, gegebenenfalls einfach oder zweifach substituiert durch F oder Cl, Cyclohexan-1,4-diyl,gegebenenfalls einfach substituiert durch F
**M**^{**1**}**, M**^{**2**}**, M**^{**4**}**, M**^{**5**} unabhängig voneinander gleich oder verschieden eine Einfachbindung, -OC(=O)- oder -(O=)C-O-, -OCH₂oder -CH₂-O, -CH₂CH₂-, -CH₂CH₂-CH₂CH₂- oder-C≡C-
**a, b,c,d** : Null oder 1 , mit dem Vorbehalt 0< {a+b+c+d} ≤ 2 und dem Verständnis daß M^{x} eine Einfachbindung ist, wenn der entsprechende Index Null ist.
**(IIa)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 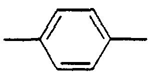 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder-(O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden 1,4-Phenylen, Cyclohexan-1,4-diyl, ,Cyclohex-1-en-1,4-diyl, Cyclohex-2-en-1,4-diyl, Bicyclo[2.2.2]octan-1,4-diyl,
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂oder -CH₂-O- oder -CH₂CH₂-, -CH₂CH₂-CH₂CH₂- oder -C≡C-
**a, b,c,d** : Null oder 1 , mit dem Vorbehalt 1≤ {a+b+c+d} ≤ 3 und dem Verständnis daß M^{x} eine Einfachbindung ist, wenn der entsprechende Index Null ist,
**(IIb)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 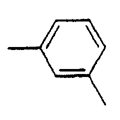 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl
und worin auch ein oder mehrere H-Atome durch F ersetzt sein können mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden 1,4-Phenylen, gegebenenfalls einfach oder zweifach substituiert durch F oder Cl, Cyclohexan-1,4-diyl,gegebenenfalls einfach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O- -OCH₂-oder -CH₂-O-, -CH₂CH₂-, -CH₂CH₂-CH₂CH₂- oder -C≡C-
**a, b,c,d :** Null oder 1 , mit dem Vorbehalt 1≤{a+b+c+d} ≤3 und dem Verständnis daß M^{x} eine Einfachbindung ist, wenn der entsprechende Index Null ist,
**(IIc)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 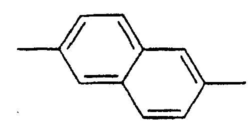 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl
und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden 1,4-Phenylen, Cyclohexan-1,4-diyl,gebenenfalls einfach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl,
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂oder -CH₂-O-, -CH₂CH₂ -, -CH₂CH₂-CH₂CH₂- oder -C=C-
**a, b,c,d :** Null oder 1 , mit dem Vorbehalt 1≤{a+b+c+d} ≤ 3 und dem Verständnis daß M^{x} eine Einfachbindung ist, wenn der entsprechende Index Null ist,
**(IId)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 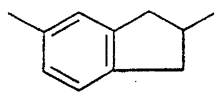 bedeutet
**R**^{**3**}**, R**^{**4**} unabhängig voneinander gleich oder verschieden Wasserstoff, Alkyl- oder Alkyloxy- mit 2- 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden 1,4-Phenylen, Cyclohexan-1,4-diyl,gegebenenfalls einfach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Naphthalin-2,6-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂oder -CH₂-O-, -CH₂CH₂-, -CH₂CH₂-CH₂CH₂- oder -C≡C-
**a, b,c,d :** Null oder 1 , mit dem Vorbehalt 1≤{a+b+c+d}≤3 und dem Verständnis daß M^{x} eine Einfachbindung ist, wenn der entsprechende Index Null ist,
**(IIe)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 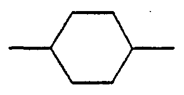 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**}unabhängig voneinander gleich oder verschieden Cyclohexan-1,4-diyl,gegebenenfalls einfach substituiert durch F, Cyclohex-1-en-1,4-diyl, Cyclohex-2-en-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O- -OCH₂-oder -CH₂-O-, -CH₂CH₂-, -CH₂CH₂-CH₂CH₂- oder -C≡C-
**a, b,c,d** : Null oder 1 , mit dem Vorbehalt 1≤{a+b+c+d}≤3 und dem Verständnis daß M^{x} eine Einfachbindung ist, wenn der entsprechende Index Null ist,
**(IIf)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 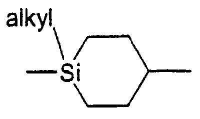 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl
und worin auch ein oder mehrere H-Atome durch F ersetzt sein können mit dem Vorbehalt, daß R³, R⁴ nicht beide Wasserstoff sein können
**A**^{**7**}**, A**^{**8**}**, A**^{**9**}**, A**^{**10**}unabhängig gleich oder verschieden 1,4-Phenylen, Cyclohexan-1,4-diyl,gegebenenfalls einfach substituiert durch F, Cyclohex-1-en-1,4-diyl, Cyclohex-2-en-1,4-diyl, Bicyclo[2.2.2]octan-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂oder -CH₂-O-, -CH₂CH₂-, -CH₂CH₂-CH₂CH₂- oder -C≡C-
**a, b,c,d :** Null oder 1 , mit dem Vorbehalt 1≤{a+b+c+d}≤3 und dem Verständnis daß M^{x} eine Einfachbindung ist, wenn der entsprechende Index Null ist,
**(IIg)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 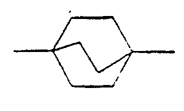 bedeutet
**R**^{**3**}**, R**^{**4**} unabhängig voneinander gleich oder verschieden Wasserstoff, Alkyl- oder Alkyloxy- mit 2 - 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden Cyclohexan-1,4-diyl,gegebenenfalls einfach substituiert durch F, Cyclohex-1-en-1,4-diyl, Cyclohex-2-en-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂oder -CH₂-O-, -CH₂CH₂-, -CH₂CH₂-CH₂CH₂- oder -C≡C-
**a, b,c,d** :: Null oder 1 , mit dem Vorbehalt 1 ≤ {a+b+c+d} ≤ 3 und dem Verständnis daß M^{x} eine Einfachbindung ist, wenn der entsprechende Index Null ist,
**(IIh)** R³(-A⁷-M⁷)ₐ(-A⁸-M⁸)_{b}-A⁶-(M⁹-A⁹)_{c}-(M¹⁰-A¹⁰)_{d}-R⁴
worin **A**^{**6**} 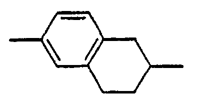 bedeutet
**R**^{**3**}**, R**^{**4**} unabhängig voneinander gleich oder verschieden Wasserstoff, Alkyl- oder Alkyloxy- mit 2- 12 C-Atomen, worin eine oder zwei -CH₂-Gruppen ersetzt sein können durch -CH=CH- oder -OC(=O)-oder -(O=)C-O- oder -Si(CH₃)₂- oder Cylopropan-1,2-diyl und worin auch ein oder mehrere H-Atome durch F ersetzt sein können
mit dem Vorbehalt, daß R³, R⁴ nicht beide Wasserstoff sein können
**A**^{**7**}**, A**^{**8**}**, A**^{**9**}**, A**^{**10**} unabhängig voneinander gleich oder verschieden Cyclohexan-1,4-diyl,gegebenenfalls einfach substituiert durch F, Cyclohex-1-en-1,4-diyl, Cyclohex-2-en-1,4-diyl
**M**^{**7**}**, M**^{**8**}**, M**^{**9**}**, M**^{**10**} unabhängig voneinander gleich oder verschieden eine Einfachbindung, -OC(=O)-oder -(O=)C-O-, -OCH₂-oder-CH₂-O-, -CH₂CH₂-, -CH₂CH₂-CH₂CH₂- oder -C≡C-
**a, b,c,d** : Null oder 1, mit dem Vorbehalt 1≤ {a+b+c+d} ≤ 3 und dem Verständnis daß M^{x} eine Einfachbindung ist, wenn der entsprechende Index Null ist,
**(III)** R⁵(-A¹¹-M¹¹)ₐ(-A¹²-M¹²)_{b}-A¹³
worin **A**^{**13**} 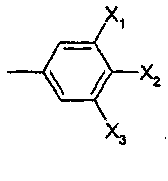 bedeutet
**und**
**X**^{**1**}**, X**^{**2**}**, X**^{**3**} unabhängig voneinander gleich oder verschieden H, Cl, F, OCF₂H, CF₃ bedeuten mit dem Vorbehalt, daß mindestens eines von X¹, X², X³ nicht H ist,
**R**^{**5**} Wasserstoff, Alkyl- oder Alkyloxy- mit 2 - 12 C-Atomen, worin eine oder zwei -CH₂-Gruppen ersetzt sein können durch -CH=CH- oder -OC(=O)- oder -(O=)C-O- oder -Si(CH₃)₂- oder Cylopropan-1,2-diyl
und worin auch ein oder mehrere H-Atome durch F ersetzt sein können
**A**^{**11**}**, A**^{**12**} unabhängig voneinander gleich oder verschieden 1,4-Phenylen, Cyclohexan-1,4-diyl, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
**M**^{**11**}**, M**^{**12**} unabhängig voneinander gleich oder verschieden eine Einfachbindung,OC(=O)- oder -(O=)C-O-, -OCH₂- oder -CH₂O-, -CH₂CH₂-, -CH₂CH₂CH₂CH₂- oder -C≡C-
**a, b**: Null oder 1 , mit dem Vorbehalt 1 ≤ {a+b} ≤ 2 und dem Verständnis daß M^{x} eine Einfachbindung ist, wenn der entsprechende Index Null ist,
**(IV)** R⁶(-A¹⁴-M¹⁴)ₐ(-A¹⁵-M¹⁵)_{b}-(M¹⁶-A¹⁶)_{c}-(M¹⁷-A¹⁷)_{d}-M¹⁸-R⁷
worin
**R**^{**6**} Wasserstoff, Alkyl- oder Alkyloxy- mit 2- 12 C-Atomen, worin eine oder zwei -CH₂-Gruppen ersetzt sein können durch -CH=CH- oder -OC(=O)- oder -(O=)C-O- oder -Si(CH₃)₂- oder Cylopropan-1,2-diyl
und worin auch ein oder mehrere H-Atome durch F ersetzt sein können.
**R**^{**7**} eine Gruppierung mit mindestens einem asymmetrischen C-atom,
das entweder Bestandteil ist einer Alkylgruppe von 3-16 C-Atomen, worin auch ein bis vier -CH₂-Gruppen ersetzt sein können durch -O- oder -OC(=O) oder (O=)C-O- und worin -CH_{3,} -CF_{3,} -OCH_{3,} -CH_{3,} Cl, F einer der Substituenten des asymmetrischen C-Atoms sein müssen,
oder Bestandteil ist eines 3-7-gliedrigen Carbocyclus worin auch eine oder zwei nicht benachbarte -CH₂-Gruppen durch -O- oder eine -CH₂-Gruppe durch -OC(=O)- oder -(O=)C-O- ersetzt sein können.
**A**^{**14**}**, A**^{**15**}**, A**^{**16**}**, A**^{**17**} unabhängig voneinander gleich oder verschieden 1,4-Phenylen, 1,3-Phenylen, jeweils gegebenenfalls einfach oder zweifach substituiert durch F oder Cl, Cyclohexan-1,4-diyl, gegebenenfalls einfach substituiert durch F oder CN, Cyclohex-1-en-1,4-diyl, 1-Fluorcyclohex-1-en-1,4-diyl, Cyclohex-2-en-1,4-diyl, 2-Oxocyclohexan-1,4-diyl, 2-Cyclohexen-1-on-3,6-diyl,1-Alkyl-1-silacyclohexen-1,4-diyl, Bicyclo[2.2.2]octan-1,4-diyl, Spiro[4.5]decan-2,8-diyl, Spiro[5.5]undecan-3,9-diyl, Indan-2,6-diyl, Naphthalin-2,6-diyl, gegebenenfalls einfach oder zweifach substituiert durch F oder CN, Pyrimidin-2,5-diyl, Pyridin-2,5-diyl, Pyrazin-2,5-diyl, Pyridazin-3,6-diyl, Chinolin-2,6-diyl, Chinolin-3,7-diyl, Isochinolin-3,7-diyl, Chinazolin-2,6-diyl, Chinoxalin-2,6-diyl, 1,3-Dioxan-2,5-diyl, Thiophen-2,4-diyl, Thiophen-2,5-diyl, 1,3-Thiazol-2,4-diyl, 1,3-Thiazol-2,5-diyl, Benzthiazol-2,6-diyl, 1,3,4-Thiadiazol-2,5-diyl, Piperidin-1,4-diyl, Piperazin-1,4-diyl
**M**^{**14**}**, M**^{**15**}**, M**^{**16**}**, M**^{**17**} unabhängig voneinander gleich oder verschieden eine Einfachbindung, -OC(=O)- oder -(O=)C-O-, -OCH₂- oder -CH₂O-, -CH₂CH₂-, -CH₂CH₂-CH₂CH₂- oder -C≡C-
**M**^{**18**} eine Einfachbindung, falls das asymmetrische C-Atom Teil einer Alkylkette ist,
und eine Einfachbindung , -OCH₂-, -CH₂O-, -OC(=O)- oder-C(=O)O- für den Fall, daß das asymmetrische C-Atom Bestandteil des bei R⁷ definierten Carbocyclus ist
**a, b,c,d :** Null oder 1 , mit dem Vorbehalt 1≤{a+b+c+d}≤3 und dem Verständnis, daß M^{x} eine Einfachbindung ist, wenn der entsprechende Index Null ist,
aufgebaut ist.

2. Aktivmatrix-Display nach Anspruch 1, **dadurch gekennzeichnet, daß** R¹ und R² geradkettiges Alkyl- oder Alkyloxy mit 2 bis 12 C-Atomen bedeuten.

3. Aktivmatrix-Display nach Anspruch 1 oder 2, **dadurch gekennzeichnet, daß** die Mischung mindestens eine Verbindung enthält, bei der in R¹ und R² eine nicht-terminale -CH₂-Gruppe durch -OC(=O)- ersetzt ist.

4. Aktivmatrix-Display nach einem der Ansprüche 1 bis 3, **dadurch gekennzeichnet, daß** in mindestens einer Verbindung der Formeln (I) oder (II) bei R¹ und/oder R² mindestens eine oder mehrere, nicht jedoch die dem Kern benachbarte -CH₂-Gruppe durch -CF₂- ersetzt ist.

5. Aktivmatrix-Display nach einem der Ansprüche 1 bis 4 **dadurch gekennzeichnet, daß** die Mischung mindestens 1 Verbindung der Formel (IV) enthält, bei der das asymmetrische C-Atom in einer Fluoralkyl-,(Trifluormethyl)alkyl- Methylalkyl- oder Oxirangruppe lokalisiert ist.

6. Aktivmatrix-Display nach einem der Ansprüche 1 bis 5, **dadurch gekennzeichnet, daß** die achirale Basismischung zusätzlich mindestens eine eine Phenylpyrimidin-, Fluorphenylpyrimidin-, Difluorphenylpyrimidin-, Phenylpyridin-, Fluorphenylpyridin-, Difluorphenylpyridin-, Benzthiiazol-2,6-diyl- oder Thiophen-2,5-diyl-Gruppe aufweisende Verbindung enthält.

7. Aktivmatrix-Display nach einem der Ansprüche 1 bis 6, **dadurch gekennzeichnet, daß** in der Flüssigkristallschicht die Länge der chiral-nematischen beziehungsweise cholesterischen Ganghöhe (pitch) in einem Temperaturbereich von mindestens 2°C oberhalb des Übergangs zur smektischen Phase mehr als 50 um beträgt.

8. Verfahren zur Herstellung von Aktivmatrix-Displays nach einem der Ansprüche 1 bis 7, bei dem man die Flüssigkristallschicht in den Zwischenraum zwischen einer geriebenen Obersubstratplatte und einer geriebenen Untersubstratplatte des Aktiv-Matrix-Displays einbringt, wobei die Reiberichtungen auf der Ober- und Untersubstratplatte im wesentlichen parallel sind, und die Flüssigkristallphase aus der isotropen Phase abkühlt, wobei zumindest beim Phasenübergang N* → smC* beziehungsweise N* → smA* → smC* eine elektrische Gleichspannung am Display anliegt.

9. Aktivmatrix-Display, herstellbar nach dem Verfahren gemäß Anspruch 8.

10. Verwendung von Aktivmatrix-Displays nach einem der Ansprüche 1 bis 7 und 9 im TV-, HDTV-, oder Multimedia-Bereich oder im Bereich der Informationsverarbeitung.

11. Verwendung nach Anspruch 10 in Notebook-PCs, Personal Digital Assistants und Desktop-Monitoren.

## Claims

1. A monostable ferroelectric active matrix display comprising a liquid-crystal layer in the form of a monodomain having an unambiguously defined direction of the layer normal z of the smC* phase, wherein the layer normals z and the preferential direction n of the nematic or cholesteric phase (N* phase) form an angle of more than 5°, where the liquid-crystal layer is composed of a liquid-crystal mixture of at least 5 compounds, which consists of an achiral base mixture comprising at least one compound from the group (I) consisting of (la - Ik), and, if desired, additionally at least one compound from the group consisting of (lla - llg) and/or at least one compound from group (III),
and
at least one chiral component from group (IV)
**(Ia)** R¹(-A¹-M¹)ₐ(-A²-M²)_{b}-A³-(M⁴-A⁴)_{c}-(M⁵-A⁵)_{d}-R²
where A³ is 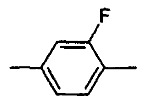 and the remaining substituents are as defined below
**(Ib)** R¹(-A¹-M¹)ₐ(-A²-M²)_{b}-A³-(M⁴-A⁴)_{c}-(M⁵-A⁵)_{d}-R²
where A³ is 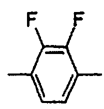 and the remaining substituents are as defined below
**(Ic)** R¹(-A¹-M¹)ₐ(-A²-M²)_{b}-A³-(M⁴-A⁴)_{c}-(M⁵-A⁵)_{d}-R²
where A³ is 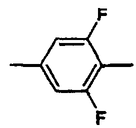 and the remaining substituents are as defined below
**(Id)** R¹(-A¹-M¹)ₐ(-A²-M²)_{b}-A³-(M⁴-A⁴)_{c}-(M⁵-A⁵)_{d}-R²
where A³ is 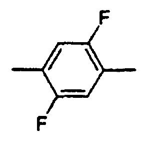 and the remaining substituents are as defined below
**(Ie)** R¹(-A¹-M¹)ₐ(-A²-M²)_{b}-A³-(M⁴-A⁴)_{c}-(M⁵-A⁵)_{d}-R²
where A³ is 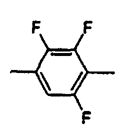 and the remaining substituents are as defined below
**(If)** R¹(-A¹-M¹)ₐ(-A²-M²)_{b}-A³-(M⁴-A⁴)_{c}-(M⁵-A⁵)_{d}-R²
where A³ is 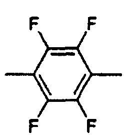 and the remaining substituents are as defined below
**(Ig)** R¹(-A¹-M¹)ₐ(-A²-M²)_{b}-A³-(M⁴-A⁴)_{c}-(M⁵-A⁵)_{d}-R²
where A³ is 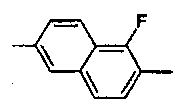 and the remaining substituents are as defined below
**(Ih)** R¹(-A¹-M¹)ₐ(-A²-M²)_{b}-A³-(M⁴-A⁴)_{c}-(M⁵-A⁵)_{d}-R²
where A³ is 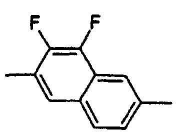 and the remaining substituents are as defined below
**(Ii)** R¹(-A¹-M¹)ₐ(-A²-M²)_{b}-A³-(M⁴-A⁴)_{c}-(M⁵-A⁵)_{d}-R²
where A³ is 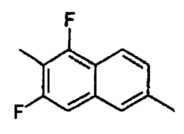 and the remaining substituents are as defined below
**R**^{**1**} **and R**^{**2**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH3)2- or cyclopropane-1,2-diyl and one or more H atoms may also be replaced by F with the proviso that R¹ and R² cannot both be hydrogen
**A**^{**1**}**, A**^{**2**}**, A**^{**4**} **and A**^{**5**} are, independently of one another, identical or different and are each 1,4-phenylene, unsubstituted, monosubstituted or disubstituted by F or Cl, cyclohexane-1,4-diyl, unsubstituted or monosubstituted by F, cyclohex-1-ene-1,4-diyl, cyclohex-2-ene-1,4-diyl, 1-alkyl-1-sila-cyclohexane-1,4-diyl, bicyclo[2.2.2]octane-1,4-diyl, indane-2,6-diyl, naphthalene-2,6-diyl
**M**^{**1**}**, M**^{**2**}**, M**^{**4**} **and M**^{**5**} are, independently of one another, identical or different and are each a single bond, -OC(=O)-, (O=)C-O-, -OCH₂-, -CH₂-O-, -CH₂CH₂CH₂CH₂- or -C≡C-
**a, b, c and d** are each zero or 1 with the proviso that 1≤{a+b+c+d}≤3 and the understanding that M^{x} is a single bond when the corresponding index is zero
**(Ik)** R¹(-A¹-M¹)ₐ(-A²-M²)_{b}-A³-(M⁴-A⁴)_{c}-(M⁵-A⁵)_{d}-R²
where A³ is 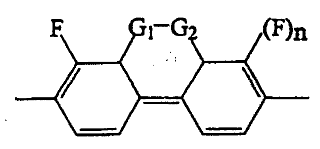 and the remaining substituents are as defined below:
**R**^{**1**} **and R**^{**2**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R¹ and R² cannot both be hydrogen
**G**_{**1**}**-G**_{**2**} is -CH=CH- or -CH₂CH₂-
**n** is zero or one
**A**^{**1**}**, A**^{**2**}**, A**^{**4**} **and A**^{**5**} are, independently of one another, identical or different and are each 1,4-phenylene, unsubstituted, monosubstituted or disubstituted by F or Cl, or cyclohexane-1,4-diyl, unsubstituted or monosubstituted by F,
**M**^{**1**}**, M**^{**2**}**, M**^{**4**} **and M**^{**5**} are, independently of one another, identical or different and are each a single bond, -OC(=O)-, (O=)C-O-, -OCH₂-, -CH₂-O-, -CH₂CH₂-, -CH₂CH₂-CH₂CH₂- or -O≡C-
**a, b, c and d** are each zero or 1 with the proviso that 0≤{a+b+c+d}≤2 and the understanding that M^{x} is a single bond when the corresponding index is zero,
**(IIa)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 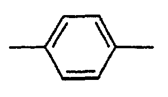 **R**^{**3**} **and R**^{**4**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each 1,4-phenylene, cyclohexane-1,4-diyl, cyclohex-1-ene-1,4-diyl, cyclohex-2-ene-1,4-diyl or bicyclo[2.2.2]octane-1,4-diyl,
**M**^{**7**}**, M**^{**8**}**, M**^{**9**} **and M**^{**10**} are, independently of one another, identical or different and are each a single bond, -OC(=O)-, -(O=)C-O-, -OCH₂-, -CH₂-O-, -CH₂CH₂-, -CH₂CH₂-CH₂CH₂- or -C≡C-
**a, b, c and d** are each zero or 1 with the proviso that 1≤{a+b+c+d}≤3 and the understanding that M^{x} is a single bond when the corresponding index is zero,
**(IIb)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 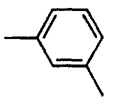 **R**^{**3**} **and R**^{**4**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each 1,4-phenylene, unsubstituted or monosubstituted or disubstituted by F or Cl, cyclohexane-1,4-dlyl, unsubstituted or monosubstituted by F, cyclohex-1-ene-1,4-diyl, cyclohex-2-ene-1,4-diyl, 1-alkyl-1-sila-cyclohexane-1,4-diyl, bicyclo[2.2.2]octane-1,4-diyl, indane-2,6-diyl, naphthalene-2,6-diyl
**M**^{**7**}**, M**^{**8**}**, M**^{**9**} **and M**^{**10**} are, independently of one another, identical or different and are each a single bond, -OC(=O)-, -(O=)C-O-, -OCH₂-, -CH₂-O-, -CH₂CH₂-, -CH₂CH₂-CH₂CH₂- or -C≡C-
**a, b, c and d** are each zero or 1 with the proviso that 1≤{a+b+c+d}≤3 and the understanding that M^{x} is a single bond when the corresponding index is zero,
**(IIc)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 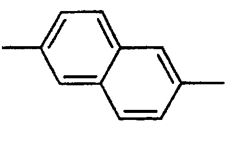 **R**^{**3**} **and R**^{**4**} are, independently of one another, identical of different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each 1,4-phenylene, cyclohexane-1,4-diyl, unsubstituted or monosubstituted by F, cyclohex-1-ene-1,4-diyl, cyclohex-2-ene-1,4-diyl, 1-alkyl-1-sila-cyclohexane-1,4-diyl, bicyclo[2.2.2]octane-1,4-diyl, indane-2,6-diyl,
**M**^{**7**}**, M**^{**8**}**, M**^{**9**} **and M**^{**10**} are, independently of one another, identical or different and are each a single bond, -OC(=O)-, -(O=)C-O-, -OCH₂-, -CH₂-O-, -CH₂CH₂-, -CH₂CH₂-CH₂CH₂- or -C≡C-
**a, b, c and d** are each zero or 1 with the proviso that 1≤{a+b+c+d}≤3 and the understanding that M^{x} is a single bond when the corresponding index is zero,
**(IId)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 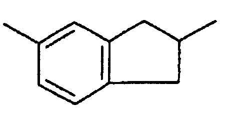 **R**^{**3**} **and R**^{**4**} are, independently of one another, identical or different and are each hydrogen, alkyl or alkyloxy having 2-12 carbon atoms, where one or two -CH2- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each 1,4-phenylene, cyclohexane-1,4-diyl, unsubstituted or monosubstituted by F, cyclohex-1-ene-1,4-diyl, cyclohex-2-ene-1,4-diyl, 1-alkyl-1-sila-cyclohexane-1,4-diyl, bicyclo[2.2.2]octane-1,4-diyl, naphthalene-2,6-diyl,
**M**^{**7**}**, M**^{**8**}**, M**^{**9**} **and M**^{**10**} are, independently of one another, identical or different and are each a single bond, -OC(=O)-, -(O=)C-O-, -OCH₂-, -CH₂-O-, -CH₂CH₂-, -CH₂CH₂-CH₂CH₂- or -C≡C-
**a, b, c and d** are each zero or 1 with the proviso that 1≤{a+b+c+d}≤3 and the understanding that M^{x} is a single bond when the corresponding index is zero,
**(IIe)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 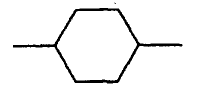 **R**^{**3**} **and R**^{**4**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each cyclohexane-1,4-diyl, unsubstituted or monosubstituted by F, cyclohex-1-ene-1,4-diyl, cyclohex-2-ene-1,4-diyl,
**M**^{**7**}**, M**^{**8**}**, M**^{**9**} **and M**^{**10**} are, independently of one another, identical or different and are each a single bond, -OC(=O)-, -(O=)C-O-, -OCH₂-, -CH₂-O-, -CH₂CH₂-, -CH₂CH₂-CH₂CH₂- or -C≡C-
**a, b, c and d** are each zero or 1 with the proviso that 1≤{a+b+c+d}≤3 and the understanding that M^{x} is a single bond when the corresponding index is zero,
**(IIf)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 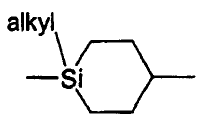 **R**^{**3**} **and R**^{**4**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each 1,4-phenylene, cyclohexane-1,4-diyl, unsubstituted or monosubstituted by F, cyclohex-1-ene-1,4-diyl, cyclohex-2-ene-1,4-diyl, bicyclo[2.2.2]octane-1,4-diyl
**M**^{**7**}**, M**^{**8**}**, M**^{**9**} **and M**^{**10**} are, independently of one another, identical or different and are each a single bond, -OC(=O)-, -(O=)C-O-, -OCH₂-, -CH₂-O-, -CH₂CH₂-, -CH₂CH₂-CH₂CH₂- or -C≡C-
**a, b, c and d** are each zero or 1 with the proviso that 1≤{a+b+c+d}≤3 and the understanding that M^{x} is a single bond when the corresponding index is zero,
**(IIg)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 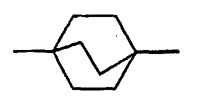 **R**^{**3**} **and R**^{**4**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each cyclohexane-1,4-diyl, unsubstituted or monosubstituted by F, cyclohex-1-ene-1,4-diyl, cyclohex-2-ene-1,4-diyl,
**M**^{**7**}**, M**^{**8**}**, M**^{**9**} **and M**^{**10**} are, independently of one another, identical or different and are each a single bond, -OC(=O)-, -(O=)C-O-, -OCH₂-, -CH2-O-, -CH2CH2-, -CH2CH2-CH2CH2- or -C≡C-
**a, b, c and d** are each zero or 1 with the proviso that 1≤{a+b+c+d}≤3 and the understanding that M^{x} is a single bond when the corresponding index is zero,
**(IIh)** R³(-A⁷-M⁷)ₐ(-A⁸-M⁸)_{b}-A⁶-(M⁹-A⁹)_{c}-(M¹⁰-A¹⁰)_{d}-R⁴
where **A**^{**6**} is 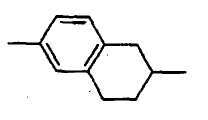 **R**^{**3**} **and R**^{**4**} are, independently of one another, identical or different and are each hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F with the proviso that R³ and R⁴ cannot both be hydrogen
**A**^{**7**}**, A**^{**8**}**, A**^{**9**} **and A**^{**10**} are, independently of one another, identical or different and are each cyclohexane-1,4-diyl, unsubstituted or monosubstituted by F, cyclohex-1-ene-1,4-diyl, cyclohex-2-ene-1,4-diyl,
**M**^{**7**}**, M**^{**8**}**, M**^{**9**} **and M**^{**10**} are, independently of one another, identical or different and are each a single bond, -OC(=O)- or -(O=)C-O-, -OCH₂- or -CH₂-O-, -CH₂CH₂-, -CH₂CH₂-CH₂CH₂- or -C≡C-
**a, b, c and d** are each zero or 1 with the proviso that 1≤{a+b+c+d}≤3 and the understanding that M^{x} is a single bond when the corresponding index is zero,
**(III)** R⁵(-A¹¹-M¹¹)ₐ(-A¹²-M¹²)_{b}-A¹³
where **A**^{**13**} is 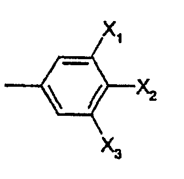 and
**X**^{**1**}**, X**^{**2**} **and X**^{**3**} are, independently of one another, identical or different and are each H, Cl, F, OCF₂H or CF₃ with the proviso that at least one of X¹, X² and X³ is not H,
**R**^{**5**} is hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F
**A**^{**11**} **and A**^{**12**} are, independently of one another, identical or different and are each 1,4-phenylene, cyclohexane-1,4-diyl, cyclohex-1-ene-1,4-diyl, cyclohex-2-ene-1,4-diyl, 1-alkyl-1-silacyclohexane-1,4-diyl, bicyclo[2.2.2]octane-1,4-diyl, indane-2,6-diyl, naphthalene-2,6-diyl,
**M**^{**11**} **and M**^{**12**} are, independently of one another, identical or different and are each a single bond, -OC(=O)- or -(O=)C-O-, -OCH₂- or -CH₂-O-, -CH₂CH₂-, -CH₂CH₂CH₂CH₂- or -C≡C-
**a and b** are each zero or 1 with the proviso that 1≤{a+b}≤2 and the understanding that M^{x} is a single bond when the corresponding index is zero,
**(IV)** R⁶(-A¹⁴-M¹⁴)ₐ(-A¹⁵-M¹⁵)_{b}-(M¹⁶-A¹⁶)_{c}-(M¹⁷-A¹⁷)_{d}-M¹⁸-R⁷
where
**R**^{**6**} is hydrogen, alkyl or alkyloxy having 2-12 carbon atoms, where one or two -CH₂- groups may be replaced by -CH=CH-, -OC(=O)-, -(O=)C-O-, -Si(CH₃)₂- or cyclopropane-1,2-diyl and one or more H atoms may also be replaced by F
**R**^{**7**} is a moiety having at least one asymmetric carbon atom which is either part of an alkyl group having 3 to 16 carbon atoms, where one to four -CH₂- groups may also also be replaced by -O-, -OC(=O)- or -(O=)C-O- and one of the substituents of the asymmetric carbon atom must be -CH₃, -CF₃, -OCH₃, -CH₃, Cl or F,
or part of a 3- to 7-membered carbocycle, where one or two nonadjacent -CH₂- groups may also be replaced by -O- or one -CH₂- group may be replaced by -OC(=O)- or -(O=)C-O-,
**A**^{**14**}**, A**^{**15**}**, A**^{**16**} **and A**^{**17**} are, independently of one another, identical or different and are each 1,4-phenylene, unsubstituted, monosubstituted or disubstituted by F or Cl, 1,3-phenylene, unsubstituted, monosubstituted or disubstituted by F or Cl, cyclohexane-1,4-diyl, unsubstituted or monosubstituted by F or CN, cyclohex-1-ene-1,4-diyl, 1-fluorocyclohex-1-ene-1,4-diyl, cyclohex-2-ene-1,4-diyl, 2-oxocyclohexane-1,4-diyl, 2-cyclohexen-1-one-3,6-diyl, 1-alkyl-1-sila-cyclohexane-1,4-diyl, bicyclo[2.2.2]octane-1,4-diyl, spiro[4.5]decane-2,8-diyl, spiro[5.5]undecane-3,9-diyl, indane-2,6-diyl, naphthalene-2,6-diyl, unsubstituted, monosubstituted or disubstituted by F or CN, pyrimidine-2,5-diyl, pyridine-2,5-diyl, pyrazine-2,5-diyl, pyridazine-3,6-diyl, quinoline-2,6-diyl, quinoline-3,7-diyl, isoquinoline-3,7-diyl, quinazoline-2,6-diyl, quinoxaline-2,6-diyl, 1,3-dioxane-2,5-diyl, thiophene-2,4-diyl, thiophene-2,5-diyl, 1,3-thiazole-2,4-diyl, 1,3-thiazole-2,5-diyl, benzthiazole-2,6-diyl, 1,3,4-thiadiazole-2,5-diyl, piperidine-1,4-diyl or piperazine-1,4-diyl,
**M**^{**14**}**, M**^{**15**}**, M**^{**16**} **and M**^{**17**} are, independently of one another, identical or different and are each a single bond, -OC(=O)-, -(O=)C-O-, -OCH₂-, -CH₂-O-, -CH₂CH₂-, -CH₂CH₂-CH₂CH₂- or -C≡C-
**M**^{**18**} is a single bond, if the moiety having the asymmetric carbon atom is part of an alkyl chain,
and a single bond, -OCH₂-, -CH₂-O-, -OC(=O)- or C(O=)O-, if the asymmetric carbon atom is part of the carbocycle defined under R⁷
**a, b, c and d** are each zero or 1 with the proviso that 1≤{a+b+c+d}≤3 and the understanding that M^{x} is a single bond when the corresponding index is zero.

2. An active matrix display as claimed in claim 1, wherein R¹ and R² are each straight-chain alkyl or alkoxy having 2 to 12 carbon atoms.

3. An active matrix display as claimed in claim 1 or 2, wherein the mixture comprises at least one compound in which, in R¹ and R², one nonterminal -CH2- group is replaced by -OC(=O)-.

4. An active matrix display as claimed in one of claims 1 to 3, wherein in at least one compound of the formulae (I) or (II), in R¹ and/or R², at least one or more -CH₂- groups, but not the -CH2- group adjacent to the nucleus, is replaced by -CF₂-.

5. An active matrix display as claimed in one of claims 1 to 4, wherein the mixture comprises at least 1 compound of the formula (IV) in which the asymmetric carbon atom is located in a fluoroalkyl, (trifluoromethyl)alkyl, methylalkyl or oxirane group.

6. An active matrix display as claimed in one of claims 1 to 5, wherein the achiral base mixture additionally comprises at least one compound having a phenylpyrimidine, fluorophenylpyrimidine, difluorophenylpyrimidine, phenylpyridine, fluorophenylpyridine, difluorophenylpyridine, benzthiazole-2,6-diyl or thiophene-2,5-diyl group.

7. An active matrix display as claimed in one of claims 1 to 6, wherein the length of the chiral nematic or cholesteric pitch in the liquid-crystal layer is more than 50 µm in a temperature range of at least 2°C above the smectic phase transition.

8. A process for producing an active matrix display as claimed in one of claims 1 to 7, which comprises introducing the liquid-crystal layer into the space between a rubbed upper substrate plate and a rubbed lower substrate plate of the active matrix display, the rubbing directions on the upper substrate plate and the lower substrate plate being essentially parallel, and cooling the liquid-crystal phase from the isotropic phase, a direct electric voltage being applied to the display at least during the N* → smC* or N* → smA* → smC* phase transition.

9. An active matrix display which can be produced by the process as claimed in claim 8.

10. The use of an active matrix display as claimed in one of claims 1 to 7 and 9 in the TV, HDTV or multimedia areas or in the area of information processing.

11. The use as claimed in claim 10 in notebook PCs, personal digital assistants and desktop monitors.

## Revendications

1. Afficheur à matrice active ferroélectrique, monostable, comprenant une couche de cristal liquide sous forme d'un monodomaine avec une direction nettement définie des normales z aux couches de la phase smC*, **caractérisé en ce que** les normales aux couches z et la direction préférée n de la phase nématique, respectivement cholestérique (phase N*) forment un angle supérieur à 5°, la couche de cristal liquide étant un mélange d'au moins 5 composés qui se compose d'un mélange de base achiral renfermant au moins un composé pris dans le groupe (I) constitué par (Ia-Ik), éventuellement en plus d'au moins un composé est pris dans le groupe formé par (IIa-IIg) et/ou au moins un composé pris dans le groupe (III),
et
au moins un composant chiral du groupe (IV)
**(Ia) R**^{**1**}**(-A**^{**1**}**-M**^{**1**}**)**_{**a**}**(-A**^{**2**}**-M**^{**2**}**)**_{**b**}**A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 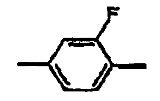 et les autres substituants possèdent les significations suivantes
**(Ib) R**^{**1**}**(-A**^{**1**}**-M**^{**1**}**)**_{**a**}**(-A**^{**2**}**-M**^{**2**}**)**_{**b**}**-A**^{**2**}**-(M**^{**4**}**-A**^{**4**}**)**_{**c**}**-(M**^{**5**}**-A**^{**5**}**)**_{**d**}**-R**^{**2**}
où A³ représente un groupe 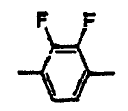 et les autres substituants possèdent les significations suivantes
**(Ic) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 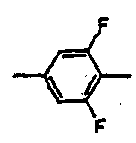 et les autres substituants possèdent les significations suivantes
**(Id) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 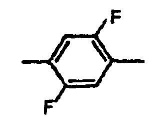 et les autres substituants possèdent les significations suivantes
**(Ie) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 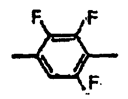 et les autres substituants possèdent les significations suivantes
**(If) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 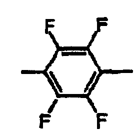 et les autres substituants possèdent les significations suivantes
**(Ig) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 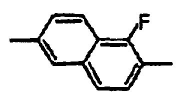 et les autres substituants possèdent les significations suivantes
**(Ih) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 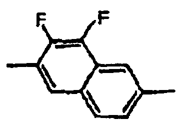 et les autres substituants possèdent les significations suivantes
**(Ii) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 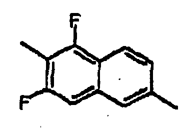 et les autres substituants possèdent les significations suivantes
R¹, R² identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle et où aussi un ou plusieurs atomes de H peuvent être remplacés par des atomes de F, à condition que R¹, R², les deux, ne puissent pas représenter en même temps un atome d'hydrogène,
A¹, A², A⁴, A⁵
identiques ou différents représentent indépendamment les uns des autres, un groupe 1,4-phénylène, éventuellement substitué une ou deux fois par un substituant F ou Cl, cyclohexane-1,4-diyle, éventuellement substitué une fois par un substituant F, cyclohex-1-ène-1,4-diyle, cyclohex-2-ène-1,4-diyle, 1-alkyl-1-sila-cyclohexane-1,4-diyle, bicyclo[2.2.2]octane-1,4-diyle, indane-2,6-diyle, naphtalène-2,6-diyle,
M¹, M², M⁴, M⁵
identiques ou différents représentent indépendamment les uns des autres une simple liaison, des groupes -OC(=O)- ou -(O=)C-O-, -OCH₂- ou -CH₂O- ou -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0.
**(Ik) R**^{**1**}**(-A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où A³ représente un groupe 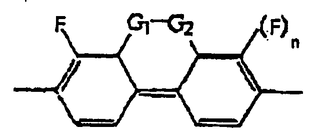 et les autres substituants possèdent les significations suivantes :
R¹, R² identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle et où aussi un ou plusieurs atomes de H peuvent être remplacés par des atomes de F, à condition que R¹, R², les deux, ne puissent pas représenter en même temps un atome d'hydrogène,
G₁-G₂ représente un groupe -CH=CH- ou -CH₂-CH₂-,
n vaut 0 ou 1,
A¹, A², A⁴, A⁵
identiques ou différents représentent indépendamment les uns des autres un groupe 1,4-phénylène, éventuellement substitué une ou deux fois par des substituants F ou Cl, cyclohexane-1,4-diyle, éventuellement substitué une fois par un substituant F,
M¹, M², M⁴, M⁵
identiques ou différents représentent indépendamment les uns des autres une simple liaison des groupes -OC(=O)- ou -(O=)C-O-, -OCH₂- ou -CH₂O- ou -CH₂CH₂-, -CH₂CH₂CH₂CH₂- ou -C≡C-,
a, b, c, d : valent 0 ou 1, à condition que 0≤{a+b+c+d}≤2 et étant entendu que M^{x} est une simple liaison, lorsque l'indice correspondant vaut 0.
**(IIa) R**^{**3**}**(-A**^{**7**}**-M**^{**7**}**)**_{**a**}**(-A**^{**8**}**-M**^{**8**}**)**_{**b**}**-A**^{**6**}**-(M**^{**9**}**-A**^{**9**}**)**_{**c**}**-(M**^{**10**}**-A**^{**10**}**)**_{**d**}**-R**^{**4**}
où A⁶ représente un groupe 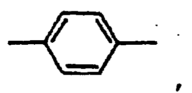 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle et où aussi un ou plusieurs atomes de H peuvent être remplacés par des atomes de F,
à condition que R³, R⁴, les deux, ne puissent pas représenter en même temps un atome d'hydrogène,
A⁷, A⁸, A⁹, A¹⁰
identiques ou différents représentent indépendamment les uns des autres un groupe 1,4-phénylène, cyclohexane-1,4-diyle, cyclohex-1-ène-1,4-diyle, cyclohex-2-ène-1,4-diyle, bicyclo[2.2.2]octane-1,4-diyle,
M⁷, M⁸, M⁹, M¹⁰
identiques ou différents représentent indépendamment les uns des autres une simple liaison, un groupe -OC(=O)- ou -(O=)C-O-, -OCH₂- ou -CH₂O- ou -CH₂CH₂-, -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(IIb) R**^{**3**}**(-A**^{**7**}**-M**^{**7**}**)**_{**a**}**(-A**^{**8**}**-M**^{**8**}**)**_{**b**}**-A**^{**6**}**-(M**^{**9**}**-A**^{**9**}**)**_{**c**}**-(M**^{**10**}**-A**^{**10**}**)**_{**d**}**-R**^{**4**}
où A⁶ représente un groupe 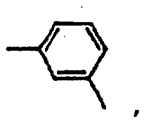 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
à condition que R³, R⁴, les deux, ne puissent pas représenter en mête temps un atome d'hydrogène,
A⁷, A⁸, A⁹, A¹⁰
identiques ou différents représentent indépendamment les uns des autres un groupe 1,4-phénylène, éventuellement substitué une ou deux fois par des substituants F ou Cl, cyclohexane-1,4-diyle, éventuellement substitué une fois par un substituant F, cyclohex-1-ène-1,4-diyle,. cyclohex-2-ène-1,4-diyle, 1-alkyl-1-sila-cyclohexane-1,4-diyle, bicyclo[2.2.2]octane-1,4-diyle, indane-2,6-diyle, naphtalène-2,6-diyle,
M⁷, M⁸, M⁹, M¹⁰
identiques ou différents représentent indépendamment les uns des autres une simple liaison, un groupe -OC(=O)- ou -(O=)C-O-, -OCH₂- ou -CH₂O-, -CH₂CH₂-, -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(IIc) R**^{**3**}**(-A**^{**7**}**-M**^{**7**}**)**_{**a**}**(-A**^{**8**}**-M**^{**8**}**)**_{**b**}**-A**^{**8**}**-(M**^{**9**}**-A**^{**9**}**)**_{**c**}**-(M**^{**10**}**-A**^{**10**}**)**_{**d**}**-R**^{**4**}
où A⁶ représente un groupe 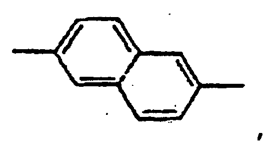 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
à condition que R³, R⁴, les deux, ne puissent pas représenter en même temps un atome d'hydrogène,
A⁷, A⁸, A⁹, A¹⁰
identiques ou différents représentent indépendamment les uns des autres un groupe 1,4-phénylène, cyclohexane-1,4-diyle, éventuellement substitué une fois par un substituant F, cyclohex-1-ène-1,4-diyle, cyclohex-2-ène-1,4-diyle, 1-alkyl-1-sila-cyclohexane-1,4-diyle, bicyclo[2.2.2]octane-1,4-diyle, indane-2,6-diyle,
M⁷, M⁸, M⁹, M¹⁰
identiques ou différents représentent indépendamment les uns des autres une simple liaison, un groupe -OC(=O)- ou -(O=)C-O-, -OCH₂- ou -CH₂O-, -CH₂CH₂-, -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(IId) R**^{**3**}**(-A**^{**7**}**-M**^{**7**}**)**_{**a**}**(-A**^{**8**}**-M**^{**8**}**)**_{**b**}**-A**^{**6**}**-(M**^{**9**}**-A**^{**9**}**)**_{**c**}**-(M**^{**10**}**-A**^{**10**}**)**_{**d**}**-R**^{**4**}
où A⁶ représente un groupe 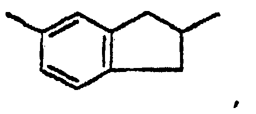 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
à condition que R³, R⁴, les deux, ne puissent pas représenter en même temps un atome d'hydrogène,
A⁷, A⁸, A⁹, A¹⁰
identiques ou différents représentent indépendamment les uns des autres un groupe 1,4-phénylène, cyclohexane-1,4-diyle, éventuellement substitué une fois par un substituant F, cyclohex-1-ène-1,4-diyle, cyclohex-2-ène-1,4-diyle, 1-alkyl-1-sila-cyclohexane-1,4-diyle, bicyclo[2.2.2]octane-1,4-diyle, naphtalène-2,6-diyle,
M⁷, M⁸, M⁹, M¹⁰
identiques ou différents représentent indépendamment les uns des autres une simple liaison, un groupe -OC(=O)- ou -(O=)C-O-, -OCH₂- ou -CH₂O-, -CH₂CH₂-, -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(IIe) R**^{**3**}**(-A**^{**7**}**-M**^{**7**}**)**_{**a**}**(-A**^{**8**}**-M**^{**8**}**)**_{**b**}**-A**^{**6**}**-(M**^{**9**}**-A**^{**9**}**)**_{**c**}**-(M**^{**10**}**-A**^{**10**}**)**_{**d**}**-R**^{**4**}
où A⁶ représente un groupe 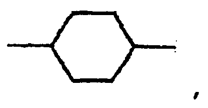 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
à condition que R³, R⁴, les deux, ne puissent pas représenter en même temps un atome d'hydrogène,
A⁷, A⁸, A⁹, A¹⁰
identiques ou différents représentent indépendamment les uns des autres un groupe cyclohexane-1,4-diyle, éventuellement substitué une fois par un substituant F, cyclohex-1-ène-1,4-diyle, cyclohex-2-ène-1,4-diyle,
M⁷, M⁸, M⁹, M¹⁰
identiques ou différents représentent indépendamment les uns des autres une simple liaison, des groupes -OC(=O)- ou -(O=)C-O-, -OCH₂- ou -CH₂O-, -CH₂CH₂-, -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(IIf) R**^{**3**}**(-A**^{**7**}**-M**^{**7**}**)**_{**a**}**(-A**^{**8**}**-M**^{**8**}**)**_{**b**}**-A**^{**5**}**-(M**^{**9**}**-A**^{**9**}**)**_{**c**}**-(M**^{**10**}**-A**^{**10**}**)**_{**d**}**-R**^{**6**}
où A⁶ représente un groupe 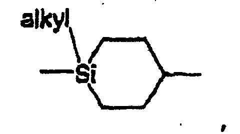 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
à condition que R³, R⁴, les deux, ne puissent pas représenter en même temps un atome d'hydrogène,
A⁷, A⁸, A⁹, A¹⁰ identiques ou différents représentent indépendamment les uns des autres un groupe 1,4-phénylène, cyclohexane-1,4-diyle, éventuellement substitué une fois par un substituant F, cyclohex-1-ène-1,4-diyle, cyclohex-2-ène-1,4-diyle, bicyclo[2.2.2]-octane-1,4-diyle,
M⁷, M⁸, M⁹, M¹⁰ identiques ou différents représentent indépendamment les uns des autres une simple liaison, un groupe -OC(=O)- ou -(O=)C-O-, -OCH₂- ou -CH₂O-, -CH₂CH₂-, -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(IIg) R**^{**3**}**(-A**^{**7**}**-M**^{**7**}**)**_{**a**}**(-A**^{**8**}**-M**^{**8**}**)**_{**b**}**-A**^{**6**}**-(M**^{**9**}**-A**^{**9**}**)**_{**c**}**-(M**^{**10**}**-A**^{**10**}**)**_{**d**}**-R**^{**4**}
où A⁶ représente un groupe 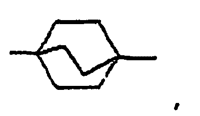 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés par des groupes -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
à condition que R³, R⁴, les deux, ne puissent pas représenter en même temps un atome d'hydrogène,
A⁷, A⁸, A⁹, A¹⁰ identiques ou différents représentent indépendamment les uns des autres un groupe cyclohexane-1,4-diyle, éventuellement substitué une fois par un substituant F, cyclohex-1-ène-1,4-diyle, cyclohex-2-ène-1,4-diyle,
M⁷, M⁸, M⁹, M¹⁰ identiques ou différents représentent indépendamment les uns des autres une simple liaison, un groupe -OC(=O)- ou -(O=)C-O-, -OCH₂- ou -CH₂O-, -CH₂CH₂-, -CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(IIh) R**^{**3**}**(-A**^{**7**}**-M**^{**7**}**)**_{**a**}**(-A**^{**8**}**-M**^{**8**}**)**_{**b**}**-A**^{**6**}**-(M**^{**9**}**-A**^{**9**}**)**_{**c**}**-(M**^{**10**}**-A**^{**10**}**)**_{**d**}**-R**^{**4**}
où A⁶ représente un groupe 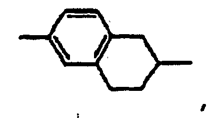 R³, R⁴ identiques ou différents représentent indépendamment l'un de l'autre un atome d'hydrogène, un groupe alkyle ou alkoxy présentant 2 à 12 atomes de carbone, où un ou deux groupes -CH₂- peuvent être remplacés un groupe -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
à condition que R³, R⁴, les deux, ne puissent pas représenter en même temps un atome d'hydrogène,
A⁷, A⁸, A⁹, A¹⁰
identiques ou différents représentent indépendamment les uns des autres un groupe cyclohexane-1,4-diyle, éventuellement substitué une fois par un substituant F, cyclohex-1-ène-1,4-diyle, cyclohex-2-ène-1,4-diyle,
M⁷, M⁸, M⁹, M¹⁰
identiques ou différents représentent indépendamment les uns des autres une simple liaison, un groupe -OC(=O)- ou -(O=)C-O-, -OCH₂- ou -CH₂O-, -CH₂CH₂-, CH₂CH₂CH₂CH₂- ou -C≡C-,
a, b, c, d : valent 0 ou 1, à condition que 1≤{a+b+c+d}≤3 et étant entendu que M^{x} est une simple liaison, lorsque l'indice correspondant vaut 0,
**(III) R**^{**5**}**(-A**^{**11**}**-M**^{**11**}**)**_{**a**}**(-A**^{**12**}**-M**^{**12**}**)**_{**b**}**-A**^{**13**}
où A¹³ représente un groupe 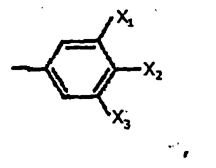 et
X¹, X², X³ identiques ou différents représentent, indépendamment les uns des autres un atome de H, de Cl, de F, un groupe OCF₂H, CF₃, à condition qu'au moins un des X¹, X², X³ ne représente pas H,
R⁵ représente un atome d'hydrogène, un groupe alkyle ou alkoxy présentant 2 à 12 atomes de carbone, où un ou deux groupes -CH₂- peuvent être remplacés par un groupe -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
A¹¹, A¹²,
identiques ou différents représentent indépendamment les uns des autres un groupe 1,4-phénylène, cyclohexane-1,4-diyle, cyclohex-1-ène-1,4-diyle, cyclohex-2-ène-1,4-diyle, 1-alkyl-1-silacyclohexane-1,4-diyle, bicyclo-[2.2.2]-octane-1,4-diyle, indane-2,6-diyle, naphtalène-2,6-diyle,
M¹¹, M¹²,
identiques ou différents représentent indépendamment les uns des autres une simple liaison, un groupe -OC(=O)- ou -(O=)C-O-, -OCH₂- ou -CH₂O, -CH₂CH₂-, -CH₂CH₂CH₂CH₂- ou -C≡C-,
a, b : valent 0 ou 1, à condition que 1≤{a+b+c+d}≤2 et étant entendu que M^{x} est une simple liaison, lorsque l'indice correspondant vaut 0,
**(IV) R**^{**5**}**(-A**^{**14**}**-M**^{**14**}**)**_{**a**}**(-A**^{**15**}**-M**^{**15**}**)**_{**b**}**-(M**^{**16**}**-A**^{**16**}**)**_{**c**}**-(M**^{**17**}**-A**^{**17**}**)**_{**d**}**-M**^{**18**}**-R**^{**7**}
où
R⁶ représente un atome d'hydrogène, un groupe alkyle ou alkoxy présentant 2 à 12 atomes de carbone, où un ou deux groupes -CH₂- peuvent être remplacés par un groupe -CH=CH- ou -OC(=O)- ou -(O=)C-O- ou -Si(CH₃)₂- ou cyclopropane-1,2-diyle
et où aussi un ou plusieurs atomes de H peuvent être remplacés par des atomes de F,
R⁷ représente un groupement avec au moins un atome de carbone asymétrique, qui est
soit partie constituante d'un groupe alkyle présentant 3 à 16 atomes de carbone, où aussi un à quatre groupes -CH₂- peuvent être remplacés par un chaînon -O- ou un groupe -OC(=O) ou -(O=)C-O- et où les groupes -CH₃, -CF₃, -OCH₃, -CH₃, Cl, F doivent être l'un des substituants de l'atome de carbone asymétrique,
soit partie constituante d'un cycle carboné de 3 à 7 chaînons, où aussi un ou deux groupes -CH₂- non adjacents peuvent être remplacés par un chaînon -O- ou un groupe -CH₂- peut être remplacé par un groupe -OC(=O) ou -(O=)C-O-,
A¹⁴, A¹⁵, A¹⁶, A¹⁷
identiques ou différents représentent indépendamment les uns des autres, un groupe 1,4-phénylène, 1,3-phénylène, chacun éventuellement substitué une ou deux fois par des substituants F ou Cl, cyclohexane-1,4-diyle, éventuellement substitué une fois par des substituants F ou CN, cyclohex-1-ène-1,4-diyle, 1-fluorocyclohex-1-ène-1,4-diyle, cyclohex-2-ène-1,4-diyle, 2-oxocyclohexane-1,4-diyle, 2-cyclohexén-l-one-3,6-diyle, 1-alkyl-1-sila-cyclohexane-1,4-diyle, bicyclo[2.2.2]octane-1,4-diyle, spiro[4,5]-décane-2,8-diyle, spiro[5.5]undécane-3,9-diyle, indane-2,6-diyle, naphtalène-2,6-diyle, éventuellement substitué une ou deux fois par F ou CN, pyrimidine-2,5-diyle, pyridine-2,5-diyle, pyrazine-2,5-diyle, pyridazine-3,6-diyle, quinoléine-2,6-diyle, quinoléine-3,7-diyle, isoquinoléine-3,7-diyle, quinazoline-2,6-diyle, quinoxaline-2,6-diyle, 1,3-dioxane-2,5-diyle, thiophène-2,4-diyle, thiophène-2,5-diyle, 1,3-thiazole-2,4-diyle, 1,3-thiazole-2,5-diyle, benzothiazole-2,6-diyle, 1,3,4-thiazole-2,5-diyle, pipéridine-1,4-diyle, pipérazine-1,4-diyle,
M¹⁴, M¹⁵, M¹⁶, M¹⁷
identiques ou différents représentent indépendamment les uns des autres une simple liaison, un groupe -OC(=O)- ou -(O=)C-O-, -OCH₂- ou -CH₂O-, -CH₂CH₂-, -CH₂CH₂CH₂CH₂- ou -C≡C-,
M¹⁸
représente une simple liaison, dans le cas où l'atome de carbone asymétrique fait partie d'une chaîne alkyle,
et représente une simple liaison, un groupe -OCH₂-, -CH₂O-, -OC(=O)- ou -C(=O)O- pour le cas où l'atome de carbone asymétrique fait partie constituante du cycle carboné défini à R⁷,
a, b, c, d : valent 0 ou 1, à condition que 1≤{a+b+c+d}≤3 et étant entendu que M^{x} est une simple liaison, lorsque l'indice correspondant vaut 0.

2. Afficheur à matrice active selon la revendication 1, **caractérisé en ce que** R¹ et R² représentent un groupe alkyle ou alkoxy linéaire présentant 2 à 12 atomes de carbone.

3. Afficheur à matrice active selon la revendication 1 ou 2, **caractérisé en ce que** le mélange renferme au moins un composé dans lequel un groupe -CH₂- non terminal dans R¹ et R² est remplacé par un groupe -OC(=O)-.

4. Afficheur à matrice active selon l'une des revendications 1 à 3, **caractérisé en ce que** dans au moins un composé de formules (I) ou (II) pour R¹ et/ou R² au moins un ou plusieurs groupes -CH₂-, toutefois non adjacents au noyau, sont remplacés par un groupe -CF₂-.

5. Afficheur à matrice active selon l'une des revendications 1 à 4, **caractérisé en ce que** le mélange renferme au moins un composé de formule (IV), dans lequel l'atome de carbone asymétrique est localisé dans un groupe fluoralkyle, (trifluorométhyl)alkyle, méthylalkyle ou oxiranne.

6. Afficheur à matrice active selon l'une des revendications 1 à 5, **caractérisé en ce que** le mélange de base renferme de plus au moins un composé présentant un groupe phénylpyrimidine, fluorophénylpyrimidine, difluorophénylpyrimidine, phénylpyridine, fluorophénylpyridine, difluorophénylpyridine, benzothiazole-2,6-diyle ou thiophène-2,5-diyle.

7. Afficheur à matrice active selon l'une des revendications 1 à 6 **caractérisé en ce que**, dans la couche de cristal liquide, la longueur de la hauteur de pas (pitch) chirale-nématique ou cholestérique dans un domaine de températures d'au moins 2°C au-dessus de la transition en phase smectique, est supérieure à 50 µm.

8. Procédé pour la préparation de l'afficheur à matrice active selon l'une des revendications 1 à 7, dans lequel on introduit la couche de cristal liquide dans l'espace entre une plaque de substrat supérieure brossée et une plaque de substrat inférieure brossée de l'afficheur à matrice active, les directions du brossage sur la plaque de substrat supérieure et inférieure sont essentiellement parallèles, et la phase de cristal liquide se refroidit à partir de la phase isotrope, en appliquant à l'afficheur une tension électrique continue au moins dans la transition des phases N* → smC* ou N* → smA* → smC*.

9. Afficheur à matrice active, que l'on peut fabriquer selon le procédé de la revendication 8.

10. Utilisation de l'afficheur à matrice active selon l'une des revendications 1 à 7 et 9 dans le domaine de la TV, de la HDTV ou des multimédias ou dans le domaine du traitement d'informations.

11. Utilisation selon la revendication 10 dans des ordinateurs portables, assistants personnels numériques et moniteurs de bureau.
